# EUROPEAN PATENT SPECIFICATION

(11) **EP 3 876 049 B1**
(45) Date of publication and mention of the grant of the patent: **30.08.2023**
(21) Application number: 21159748.9
(22) Date of filing: 26.02.2021
(51) Int. Cl.: G05B 19/042, G05B 23/02

(54) **DIAGNOSING FAULTS IN A RIVETING MACHINE**
FEHLERDIAGNOSE AN EINER NIETMASCHINE
DIAGNOSTIC DES DÉFAUTS D'UNE MACHINE DE RIVETAGE

(30) Priority: 03.03.2020 GB 202003015
(43) Date of publication of application: 08.09.2021
(73) Proprietor: Atlas Copco IAS UK Limited, Flintshire, North Wales CH5 2NS (GB)
(72) Inventor: ELLIOT, Peter John, Novi, Michigan 48377-1904 (US)
(74) Representative: Marks & Clerk LLP

(56) References cited:
- KR-A- 20150 104 766
- US-A- 5 617 311
- US-A- 5 636 124
- US-A1- 2010 106 809
- US-A1- 2017 160 733
- US-A1- 2018 324 056
- Unknown: "Configuring Messages and Alarms in Alarms in WinCC (TIA Portal) - Extension with S7-1200/S7-1500", , 1 May 2018 (2018-05-01), pages 1-58, XP055846323, Retrieved from the Internet: URL:https://cache.industry.siemens.com/dl/ files/503/62121503/att_950826/v1/62121503_ wincc_tia_alarms_S7-1x00_en.pdf [retrieved on 2021-09-30]

## Description

The present application relates to methods and apparatus for operating, diagnosing and resolving faults in an industrial machine. More particularly, but not exclusively, the application relates to methods and apparatus for diagnosing and resolving faults in a riveting system.

During operation, industrial machinery may develop faults that are difficult to detect as the system relies on the system inputs and outputs to determine the correct time to transition through the machine's operating sequence, and the timing or presence of these signals may change over time with incremental imperceptible changes which eventually lead to a fault condition. For example, during transition of an industrial machine from one state of its operating sequence to another state, the industrial machine may provide corresponding input and output signals. In certain situations, when errors occur in the operation of the industrial machine, the input and output signals provided by an industrial machine may not be an expected value or may not be provided within an expected time, indicating the presence of the fault. However, industrial machines are often large and complex, with many possible states and corresponding faults. This can make it difficult for an operator of the industrial machine to determine in which state the machine is currently operating, or in which state a fault occurred. As such there is a need for methods and apparatus to diagnose and resolve faults in industrial machines such as a riveting system.

It is an object of one or more of the embodiments described herein to obviate or mitigate at least one of the issues set out above.

US 2017/0160733 describes a system for monitoring manufacturing, including one or more processors that determine a quality metric represented by machine data collected from one or machine data sensors and identify a correlation value between the machine data and environmental data collected from one or more environmental data sensors.

### Summary

According to a first example described herein, there is provided a method for diagnosing faults in an industrial machine. The method comprises identifying a first state associated with the industrial machine, the first state comprising a currently active state of a state machine modelling the functions of the industrial machine; identifying at least one second state associated with the industrial machine based on the first state, the at least one second state comprising a state of the state machine that was active at any point in time before the state machine transitioned to the first state; for each identified second state, determining a state time associated with the second state; determining a fault indicator condition responsive to determining, based on the at least one second state and the respective state times, that the industrial machine spent a time period different to a predetermined time period in at least one of the at least one second states; generating, responsive to determining the fault indication, diagnostic information comprising an indication of the one of the at least one second state; and outputting the diagnostic information in a user interface of the industrial machine.

The first aspect described herein, therefore allows for generation of diagnostic information based upon information associated with at least one-second state of a state machine modelling the operations of an industrial machine. The at least one second state may be a currently active state of a state machine. Based on the diagnostic information outputted in the user interface of the industrial machine the operator may determine in which state the machine is currently operating, or in which state a fault occurred.

The method may further comprise maintaining, during operation of the industrial machine, a history of states and associated state times, wherein identifying a second state and state time associated with the second state comprises identifying the second state and associated state time from the history of states and associated state times. The history of states and the associated state time may be stored in a circular buffer. The circular buffer may comprise a pointer pointing to a memory location storing the currently active state of the industrial machine. It will be appreciated that the use of circular buffer may further improve the speed of operation of the method associated with the first aspect. The history of states and the associated state times may also be stored in any fixed-size buffer.

The method may further comprise copying, responsive to determining the fault indicator condition, contents of a predetermined number of data entries in the history of states and associated state times. For example, predetermined number may be all of the current entries. In this way, subsequent overwriting of the entries (e.g. where the entries are stored in a circular buffer, or other fixed-size buffer) does not erase information that may be used to diagnose problems within the industrial machine. Indeed, it will be appreciated that for some industrial machines, state transitions may occur extremely quickly, such that relevant information may otherwise be lost from the state history data shortly after a fault is detected.

The state time associated with each of the at least one second states may be based upon a value of a global timer at a time of transition to the second state, wherein the global timer is used by the industrial machine to synchronise all operations of the industrial machine. Basing the state time upon the value of a global timer allows the state histories to be cross-checked against I/O signal, providing a further mechanism to enable diagnosis of the faults within the industrial machine.

The user interface may further comprise generating an indication of a state history of the industrial machine, the state history comprising a currently active state of the industrial machine, a state that will be active after the currently active state, a state that was active before currently active state and state times associated with the currently active state.

The method may further comprise displaying the user interface on a human-machine interface of the industrial machine. Industrial machines often have human-machine interfaces capable of displaying only a limited quantity of information and capable of refreshing the display only infrequently. The user interfaces generated according to the techniques described herein are particularly adapted to the technical limitations of human-machine interfaces that are commonly provided with industrial machines.

The user interface may further comprise an indication of a transition path followed by the industrial machine to arrive at the currently active state.

The method may further comprise providing in the user interface, a state-force user interface element, wherein selection of the state-force user interface element causes the industrial machine to transition to a predetermined state. For example, the state-force user interface may force the industrial machine to transition to a pre-set state (such as a starting or initial state), or may force the industrial machine to transition to a state of the operator's choosing. By forcing the industrial machine to transition to a particular state, the industrial machine may implement operations associated with that state.

The method may further comprise maintenance, during operation of the industrial machine, of a history of states and associated state times continues after selection of the state force user interface element. This feature allows continued diagnostic operations to be performed for the industrial machine even after a forced operator action. In this way, an operator may force an industrial machine to a particular state (for example a state suspected as a root of a fault condition) and continue to monitor operation of the industrial machine.

Generating a diagnostic output may further comprise processing the second state and state time information to generate an output indicating timing of state transitions. The method may further comprise providing a time calculation user interface element configured for display with the output indicating timing of state transitions, the time calculation user interface configured to allow an operator to select two positions within the output indicating timing of state transitions and to output a time period between the selected two positions. The time calculation user interface element allows the user to easily determine a time spent in a state.

The method may further comprise: identifying a change in an I/O signal associated with the industrial machine; assigning to a state indicator associated with the I/O signal a value indicative of the change, the assignment configured to persist for a predetermined time period; generating diagnostic information further comprising an indication of a current value of the I/O signal and a current value of the state indicator; outputting a diagnostic output based on the diagnostic information in a user interface of the industrial machine. By updating a state indicator with a value that is configured to persist for a predetermined time period, the changes in the I/O signals can be displayed on the types of human-machine interface that are often provided with an industrial machine. In particular, the state changes can be displayed on human-machine interfaces having relatively slow refresh rates. The diagnostic output may be the diagnostic information or may be an output based on the diagnostic information.

Generating diagnostic information may be performed at each refresh interval of a human-machine interface of the industrial machine. The predetermined time period may be greater than a refresh rate of a human machine interface of the industrial machine. For example, the predetermined time period may be greater than or equal to two refresh periods of the human machine interface.

The method may further comprise resetting the state indicator associated with the I/O signal after the predetermined time period has elapsed. Outputting the diagnostic information in a user interface of the industrial machine may further comprise outputting the diagnostic information using an indicator having four modes of operation, the four modes of operation comprising: a first mode indicating that the I/O signal is low and that no high signal has been received within a past predetermined time period, a second mode indicating that the I/O signal is low, but that a change of state occurred within the past predetermined time period, a third mode indicating that the I/O signal is high and a change of state occurred during the past predetermined time period, and a fourth mode indicating that the I/O signal is high and has not changed during the past predetermined time period.

The I/O signal may be one of a plurality of I/O signals, the state indicator associated with the I/O signal may be associated with the plurality of I/O signals and the diagnostic information may indicate changes to any of the plurality of I/O signals.

The method may further comprise maintaining a diagnostic signal history buffer for the plurality of I/O signals, the diagnostic signal history buffer configured to provide an historical indication of changes to any of the plurality of I/O signals.

The diagnostic signal history buffer may comprise a plurality of slots, each slot comprising an entry for each of the plurality of I/O signals and wherein each of the slots represents a state of the plurality of I/O signals at a different time in the past and the diagnostic output may be based on a slot of the diagnostic signal history buffer referenced by an index, wherein the index is updated to refer to a next one of the slots of the diagnostic signal history buffer with a predetermined frequency.

The method may further comprise decaying indications of changes to the plurality of I/O signals stored in at least one of the slots with the predetermined frequency. Decaying indications of changes to the plurality of I/O signals stored in a slot may comprise resetting the value stored in the slot.

The diagnostic information may comprise a bit for each of the plurality of I/O signals and each slot of the diagnostic signal history buffer comprises a bit for each of the plurality of I/O signals and the method may further comprise: in response to generating diagnostic information indicating a change to at least one of the plurality of I/O signals, updating the value stored in each slot by logically combining the diagnostic information with the value stored in the slot; and resetting the value of the currently indexed slot. It will be appreciated that the currently indexed slot may be reset before or after updating the index to the next slot. The number of slots may be equal to or greater than the number of I/O signals in the plurality of I/O signals.

The predetermined frequency may be based upon the sum of the number of slots in a diagnostic signal history buffer and a refresh period of a human machine interface of the industrial machine

Assigning to a state indicator a value indicative of the change may further comprise storing a time associated with the change. Storing a time associated with the change may further comprise recording a time indicated by a global timer at the time of the change.

The industrial machine may be a riveting machine, an adhesive dispensing machine or a flow drill system.

According to a third example described herein, there is provided a system for diagnosing faults in an industrial machine. The system may further comprise a controller and a memory storing computer readable instructions that may be configured to cause the controller to perform the method according to the first or the second aspect described herein.

According to a fourth example described herein, there is provided an industrial machine. The industrial machine may comprise a system according to the examples described above or elsewhere herein.

Where features have been described above in the context of one example implementation, it will be appreciated that where appropriate such features may be applied to other example implementations. Indeed, any of the features described above and elsewhere herein can be combined in any operative combination and such combination is expressly foreseen in the present disclosure.

To the extent appropriate, methods described herein may be implemented by way of suitable computer programs and as such, computer programs comprising processor readable instructions arranged to cause a processor to execute such control methods are provided. Such computer programs may be carried on any appropriate carrier medium (which may be a tangible or non-tangible carrier medium).

### Brief description of drawings

Embodiments will now be described, by way of example only, with reference to the accompanying drawings, in which:
- Figure 1 is a schematic illustration of a state machine;
- Figure 2 is a schematic side view of riveting system;
- Figure 3 schematically depicts a rivet setting tool 10, rivet tape and a rivet tape reel that performs the sprocket feed for a riveting system;
- Figure 4A schematically depicts a tape reel and Figure 4B schematically depicts a rivet setting tool feed sub-assembly 300 comprising a tape cutter assembly and a rivet sensor.
- Figure 5 is a schematic representation of a state machine modelling the sprocket feed operations of the rivet setting tool;
- Figure 6 a flowchart showing processing for performing diagnosis of an industrial machine;
- Figure 7 is a schematic diagram of an example data structure that may be used to record a plurality of states associated with an industrial machine and the time during which the industrial machine operated in each one of the plurality of states;
- Figures 8 and 8A are a schematic view of an enhanced diagnostic display that may be provided to an operator of an industrial machine;
- Figure 9 is a schematic illustration of a diagnostic system for generating and providing diagnostic information for the continued operation and maintenance of an industrial machine such a rivet system illustrated in Figure 2;
- Figure 10 is an illustration of enhanced diagnostic information that may be generated by the diagnostic system of Figure 9;
- Figure 11 is a flowchart showing example processing that may be carried out to maintain an I/O signal history for the generation of diagnostic information; and
- Figures 12 to 14 are schematic illustrations of a diagnostic output that may be provided to an operator of an industrial machine;
- Figure 15 is a schematic diagram of an example data structure that may be used to record a plurality of changes to I/O signals associated with an industrial machine;
- Figure 16 is a schematic illustration of how data stored in a portion of the data structure depicted in Figure 15 may change during operation of techniques described herein; and
- Figures 17 and 18 are schematic illustrations of a diagnostic output that may be provided to an operator of an industrial machine.

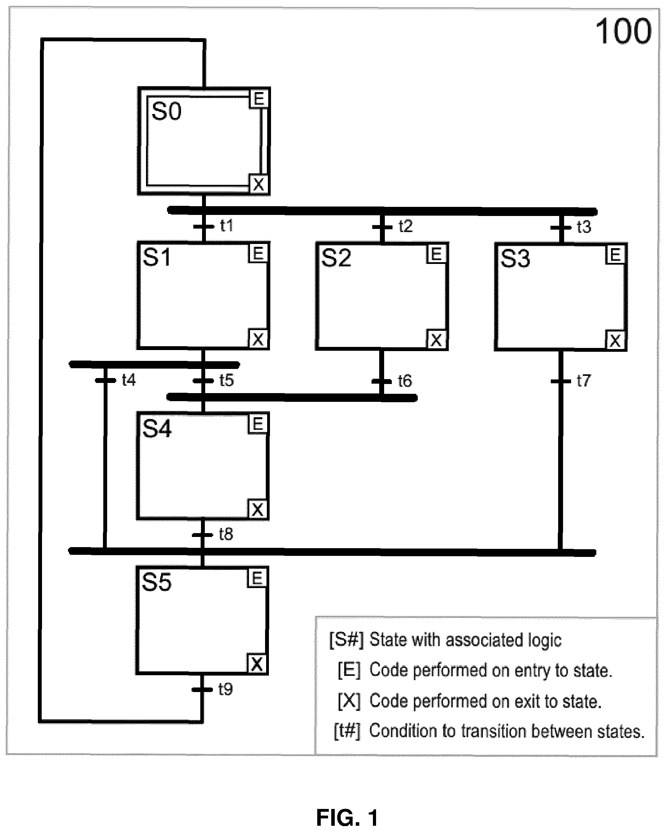

Referring to Figure 1, there is illustrated an example state machine which may be used in connection with techniques described herein. A state machine, in general, is a logical construct comprising a number of phases within an operating sequence, referred to as "states". A state machine will have an initial state (S0 in figure 1) which will be activated when the operating logic is started, together with a number of additional states (S1 to S5 in figure 1) which can become active when the required transition conditions (t1 to t9 in figure 1) become true. The transitions are logical conditions made up from the control inputs, which consist of timing, input and output signals, and which may be prioritized by the developer to try to take an optimum path through the sequence for any given set of operating conditions. A state machine can be in any one of a set number of states depending on the immediately previous state and on the present values of its control inputs. In operation, the state machine transitions from an initial, or its current, state to one or more different states in a specified order when the condition defining a transition has been met.

The example state machine 100 comprises six states each of which is represented by a value from S0 to S5. Each of the states is linked by a transition, such that each transition has a source (a starting state) and a destination (an ending state). A condition is associated with each of the transitions such that, when the evaluation of the condition evaluates to "true" (i.e. the condition is met), the state machine 100 transitions from a source state to a destination state associated with the transition, and typically stops evaluating any other transition to prioritize the machine sequencing. This can be performed by, for example, setting a condition within each state that there is no active higher priority transition, or by skipping the logic which evaluated the lower priority transitions once a higher priority transition has its conditions met.

In the example state machine 100, state S0 is linked to states S1, S2, S3 by conditions t1, t2, and t3 respectively such that on performance of any one of these conditions, the state machine 100 transitions from S0 to one of states S1, S2 or S3. Typically a state transition will be prioritized such that if two, or more, transitions are active simultaneously one will take precedence. States S1 and S2 are linked to state S4 by conditions t5 and t6 respectively and states S1, S3 and S4 are linked to state S5 by transition conditions t4, t7 and t8 respectively. State S5 is further linked to the default state S0 by a transition condition t9.

After a state transition, the state machine 100 will process all the entry actions [E] associated with the newly activated state prior to the state's normal logic being evaluated. The state machine 100 will then continue operating in the currently active state, performing any actions specified for that state, until a valid transition (t) condition becomes active. This will result in the performance of any exit actions [X] of the current state, prior to transitioning to the next, or destination, state in the sequence. When a state is inactive, any code or transition logic associated with the state is not acted upon.

Inclusion of an entry action E and/or exit action X within a state ensures that regardless of a transition path followed by a state machine, a specific set of actions may be performed on entry and exit from a state, which is useful for initializing the data used by the newly activated state, and to tidy-up any outstanding operations prior to moving on in the state sequence.

When modelling an industrial machine, the states of a state machine correspond to the steps taken by the industrial machine to perform its operation. Transitions from one state to another occur based on the input signals provided to the industrial machine, time, or a combination of both. For example, one or more state machines may be used in riveting systems to model the operation of motion and feed logic, to ensure that the system will perform the desired functions in response to the appropriate input signals.

The outputs from the industrial machine will be dependent on the currently active state and the logic which is operating during that state, with outputs typically only changing during the transitions between states. In certain situations, when faults occur, the inputs to the state machine may not be correct, thereby preventing the state machine from transitioning correctly. This in turn causes the output signals provided by an industrial machine to be outside of expected values, or to not be provided within an expected time (or at all).

While a state machine can allow the modelling of a complex industrial machine such as a riveting system, such state machines may be large and complex, making it difficult for a person using the state machine to comprehend its operation and therefore the operation of the industrial machine. Consequently, it is often difficult to identify errors or faults in an industrial machine modelled by a complex state machine. As such there is a need for methods and apparatus to diagnose and resolve faults in industrial machines such as a riveting system whose operations may be modelled by complex state machines.

State machines, such as the one illustrated in Figure 1 can be used to model the operations of an industrial machine. Generally, when a state machine is used to model the operations of an industrial machine, the output generated on the performance of actions associated with each state is known in advance. If the output generated by the state machine on performance of actions associated with a currently active state of a state machine is different from the expected output, if there is delay in producing the output, or if no output is produced, this implies that there is a fault in the functioning of the industrial machine whose operations are being modelled by the state machine.

In a complex industrial machine, such as a riveting system, a state machine modelling the operations of the industrial machine may comprise, for example, of the order of 256 states or more. Consequently, it may be difficult for an operator to understand the operation of the state machine for the purpose of troubleshooting. In such instances, it would be useful if the operator has access to information that allows the operator to diagnose and resolve faults in the industrial machine based on the currently active state of the state machine.

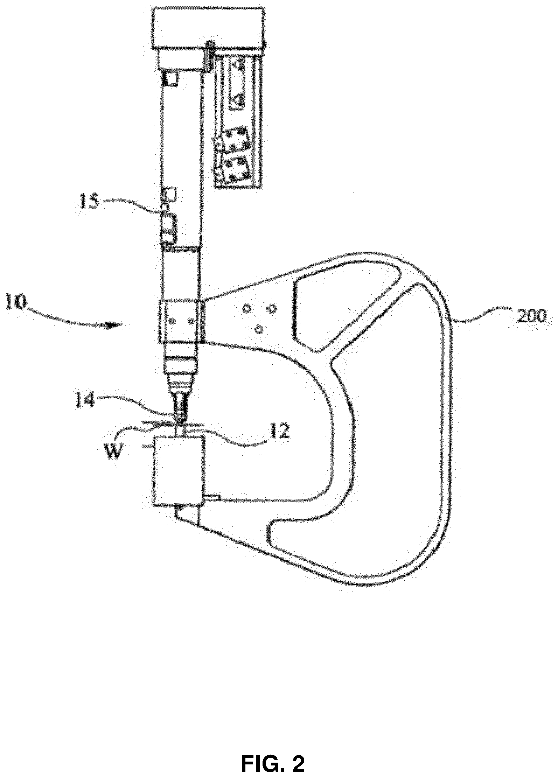

Techniques described herein provide methods and apparatuses for diagnosing and resolving faults in an industrial machine through use of a state machine modelling the operations of an industrial machine based on information associated with the currently active state of the state machine. Example arrangements are described in further detail with reference to Figures 2 to 8, using the example of a rivet system and the sprocket feed operation performed by the rivet system.

In Figure 2, a rivet setting tool 10 is illustrated, comprising a rivet setting actuator 15 mounted on an upper arm of a conventional C-frame 200 above a rivet-upsetting die 12 supported in the lower arm of the C-frame 200. Rivets are inserted by the tool 10 into workpieces W supported over the die 12 as is well known in the art. The C-frame 200 is mounted on a robot manipulator (not shown) such that it is movable with the tool 10 by the robot towards and away from the workpieces W as required. A feed apparatus (not shown) alongside the C-frame 200 is designed to supply rivets R to the setting tool 10 in a predetermined and controllable fashion from a bulk source.

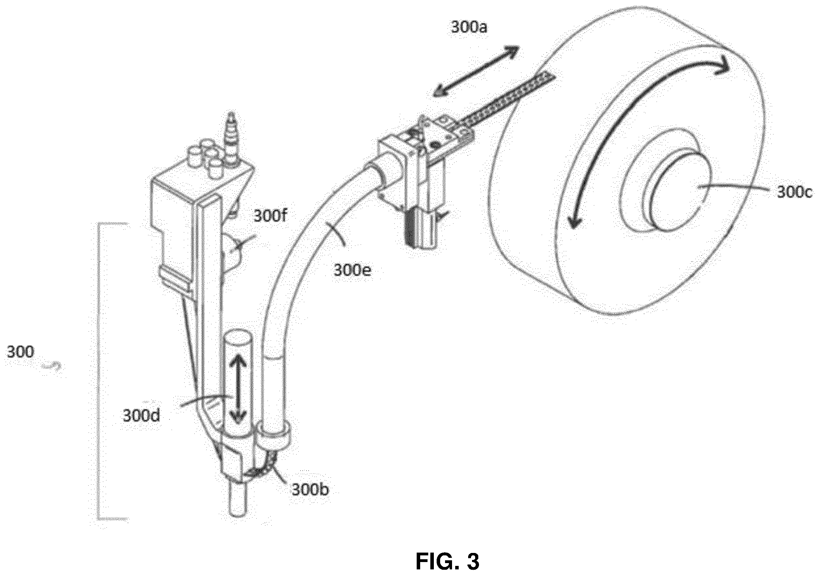

The setting tool 10 comprises a cylindrical housing that houses a reciprocal plunger that is driven in translation relative to the housing by a hydraulic, pneumatic or electric drive. The housing has an end nose portion 14 with an annular surface for contact with the workpieces W in which the joint is to be formed and the plunger terminates in a punch (not shown) that reciprocates in a passage (best seen in Fig. 3) extending through the nose. In order to insert a rivet into the workpieces W the plunger is driven so that the punch descends in the passage extends beyond the nose 14 and comes into contact with a rivet that has been fed to end of the passage in the nose 14. Continued application of the force drives the punch through the nose 14 so that the rivet is inserted into the workpieces W.

The operations of the rivet feed system of a rivet setting tool 10 can generally be modelled by means of a state machine such as the state machine 100 illustrated in Figure 1.

Figure 3 depicts a perspective view of a rivet feed apparatus tool 300(which may also be referred to as rivet insertion tool), together with a rivet tape 300a. The rivet feed apparatus 300 is supplied with rivets by means of the rivet tape 300a along which rivets 300b are distributed. The rivet tape 300a is wound in a reel onto a spool carrier 300c, and is fed from the reel through a nose assembly 300d (i.e. corresponding to the nose 14 of Figure 2) of a riveting setting tool 300. The nose assembly 300d is typically provided at one end of the rivet setting tool and comprise a punch (not shown). The punch moves relative to the nose assembly 300d and depending on the position of the punch the nose assembly is in a stationary position or a retracted position. When a punch extends towards the workpiece the nose assembly is in stationary position and when the punch does not extend towards the work piece and leaves space for a rivet to be positioned between the punch and the workpiece then the nose assembly is in a retracted position.

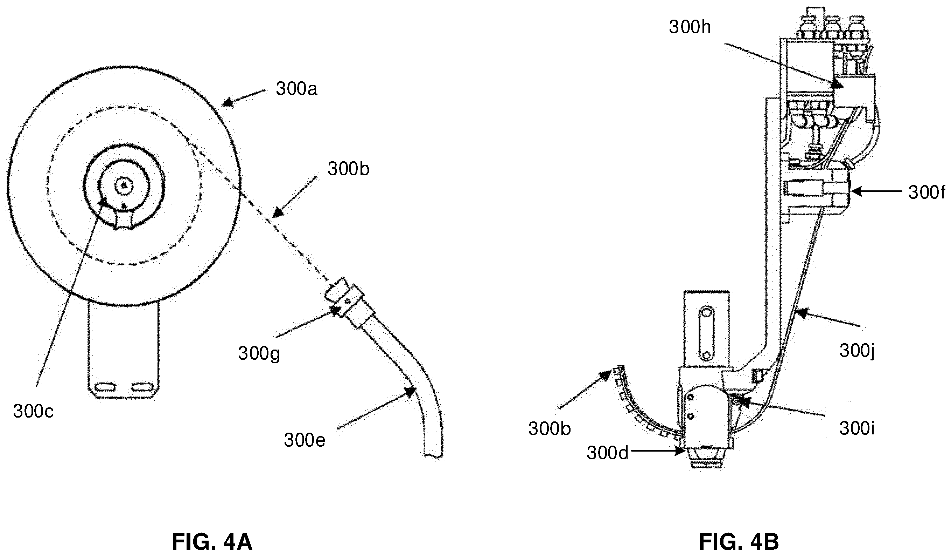

Figures 4A and 4B depicts the feed path of a tape fed rivet setting tool. Figure 4A depicts in cross-section the tape 300a wound on the spool carrier 300c, with the rivet tape laden with rivets 300b passing through a tube 300e. The rivet tape 300a is fed to the rivet setting tool 10 through a tube 300e. The rivet tape 300a is drawn through the rivet setting tool's feed sub-system 300 (not visible) by a sprocket feed actuator 300f (e.g. a pneumatic motor with sprocket wheel). The tube 300e, as shown in Figure 4A may optionally comprise a sensor 300g to sense the end of the rivet tape. In Figure 4B, a perspective view of the feed sub-system of the rivet setting tool 10 comprising a tape cutter assembly 300h and a rivet sensor 300i is illustrated.

The feed motor 300f pulls the rivet tape 300a through the nose assembly 300d until a rivet enters the rivet receiving member (not shown) and the rivet is detected by a sensor 300i illustrated in Figure 4B. The feed motor 300f then stops and the rivet is driven into a workpiece by an actuator (not shown) of the riveting setting tool 10 (not shown). The feed motor 300f then moves again until the next rivet is detected, etc. The sensor 300g also detects when the spool is reaching the end with between 30 and 100 rivets remaining depending on the application, allowing an operator of the rivet setting tool 10 to schedule replacement when not actively riveting in a part. Once the tape 300a has been fed through the nose assembly 300d, the spent tape 300j is either spooled up in a waste receptacle on fixed systems, or cut into manageable lengths by the pneumatic tape cutter assembly 300h illustrated in Figure 4B comprising a tape cutter blade (not shown). It will be appreciated that in certain rivet setting tools a spring spool arrangement, with pneumatic spool or simple spool carrier may also be used to supply rivets via the spool carrier 300c.

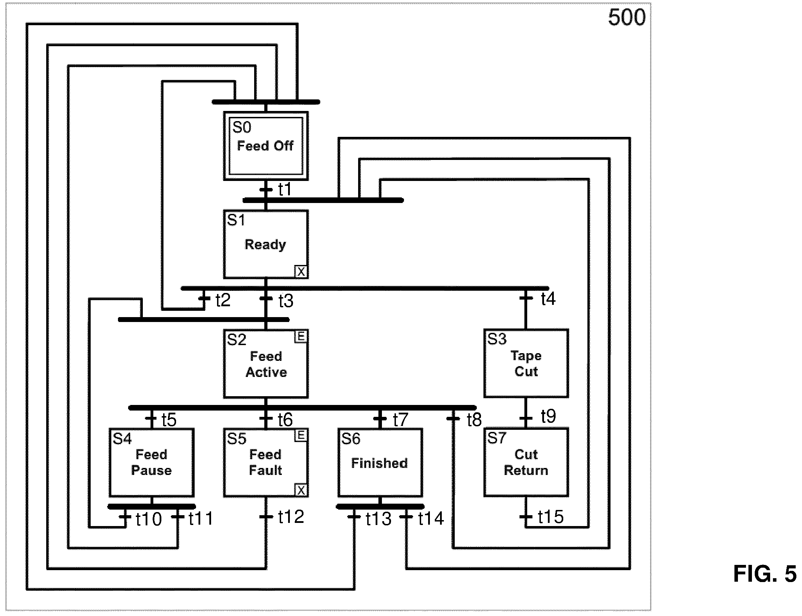

Figure 5 provides a schematic representation of a state machine 500 suitable for modelling tape feed control logic that performs the rivet feed operations of the rivet setting tool 10. Initially, when the rivet feed operation of the rivet setting tool is disabled, the feed control logic is in a non-operational state and the state machine 500 is in the default state "Feed Off" (**S0**). An exit condition **t1** associated with the Feed Off state S0 is satisfied when the feed operation of the rivet setting tool 10 is enabled (e.g. by removing any machine stop inputs and enabling the feed control logic). On satisfaction of **t1,** the state machine 500 transitions from the Feed Off state S0 to a "Ready" state (**S1**).

While in the "Ready" state (**S1**), if any external stop inputs are detected then the **t2** condition will be activated and the system will return to the "Feed Off" state (**S0**). However, if the machine stop inputs remain inactive, no rivet feed request is active, and the tape cut request is activated then the conditions for the exit condition **t4** will be met and the system 500 will transition to the "Tape Cut" state (**S3**).

When the active state of the state machine 500 is the "Tape Cut" state (**S3**), a tape cut is initiated, causing the tape cutter blade of the tape cutter assembly 300h to cut the spent rivet tape 300j. An exit condition **t9** associated with the Tape Cut state (**S3**) is satisfied when the rivet tape 300j is cut, causing the state machine 500 to transition to a "Cut Return" state (**S7**).

When the "Cut Return" state (**S7**) is active, the tape cutter blade is retracted, clearing a feed path for the spent tape 300j. After the tape cutter blade is retracted, the feed control logic of the rivet setting tool 10 waits for the removal of the tape cut request signal, at which point exit condition **t15** is activated causing the state machine 500 to transition to the "Ready" state (**S1**). While in the "Tape Cut" state (**S3**) or "Cut Return" state (**S7**) the system will not respond to any rivet feed request, removing the possibility of moving the sprocket tape during the tape cutting process which will lead to a higher feed reliability.

In the "Ready" state (**S1**), if no stop condition or tape cut request is active when a "feed request" or a "feed next" command signal is received by the feed control logic then exit condition **t3** is activated and the state machine 500 transitions to a "Feed Active" state (**S2**). On the transition from the "Ready" state (**S1**) to the "Feed Active" state (**S2**) the feed pull counter is reset to zero via the exit action.

On entry to the "Feed Active" state (**S2**) the feed pull counter is incremented via the entry action, and while the feed control logic is in the "Feed Active" state (**S2**), a feed actuator 300f is activated which will pull the rivet tape 300a into the nose 300d. There are four exit conditions associated with the "Feed Active" state (**S2**)**.**

Firstly, if the nose switch sensor **300i** becomes active for a predetermined period of time, selected depending on the movement condition of the tool (stationary or retracting), or the maximum number of feed pulls has been met with the "Feed Next" command then exit condition **t7** is activated and the state machine 500 transitions to a "Finished" state (**S6**). For example, the feed control logic may transition to the "Finished" state (**S6**) if the nose switch sensor **300i** becomes active for the required time duration based on the movement of the tool (typically 0.125 seconds when stationary or 0.1 seconds during retraction).

Secondly, when the feed actuator **300f** is active for a predetermined time and the number of feed pull cycles is below the maximum allowed, for example 1 second and 3 pulls, without the nose switch sensor **300i** becoming active, an exit condition **t5** is satisfied and the feed control logic 500 transitions to a "Feed Pause" state (**S4**).

Thirdly, when the feed actuator **300f** is active for a predetermined time and the number of feed pull cycles has reached the maximum allowed, for example 1 second and 3 pulls, without the nose switch sensor **300i** becoming active, an exit condition **t6** is satisfied and the feed control logic 500 transitions to a "Feed Fault" state (**S5**).

Finally, if both of the "feed request" and "feed next" command signals are removed then exit condition **t8** will be satisfied and the feed control logic transitions to the "Ready" state (**S1**), interrupting any feed which might be in progress.

When the state machine 500 is in the "Feed Pause" state (**S4**), the feed actuator is deactivated, allowing the parts of the rivet setting tool **10** performing the rivet feed (300f) to return to their initial positions. If the feed control logic is disabled when the state machine 500 is in the "Feed Pause" state (**S4**), an exit condition **t10** is satisfied and state machine 500 transitions to the "Feed Off" state (**S0**). If the actuator has been deactivated for a prescribed period of time, for example 0.25 sec, the exit condition **t11** has been satisfied and the state machine 500 transitions to the "Feed Active" state (**S2**).

When the state machine 500 transitions into the "Feed Fault" state (**S5**), the fault code corresponding to the feed issue will be set depending on the status of the end of tape sensor **300g,** and the state machine 500 will remain in the "Feed Faulted" state (**S5**) until a fault acknowledgement signal input is received, at which point transition **t12** will be satisfied and the feed fault code will be reset to zero prior to transitioning back to the "Feed Off" state (**S0**).

When the currently active state of the feed system is the "Finished" state (**S6**), the feed system has either fed a rivet under the punch attached to the nose 300d or timed out during a "feed next" command. In this state the system awaits the removal of the "feed request" and "feed next" commands which satisfies exit condition **t14** and causes the state machine 500 to return to the "Ready" state (**S1**) if the feed system is still enabled, or if the feed control logic is disabled an exit condition **t13** is satisfied and the state machine 500 returns to the "Feed Off" state (**S0**).

As can be seen from Figure 5, the state machine 500 is equipped to deal with faults when the reason for the fault is known in advance, such as a rivet pull exceeding the predetermined limit, and informing the operator of such faults. However, if the performance of the rivet setting tool is reduced due to unknown issues, but prior to a fault being generated, it becomes difficult for an operator to identify a fault in the operation of the industrial machine using the state machine, as the fault may be caused by any one of the actions performed by the industrial machine. In such situations, in order to identify the fault and to diagnose the industrial machine, the operator may have to understand the working of the industrial machine by going through each and every transition path in a state machine modelling the operations of the industrial machine and the actions associated with each state in the transition path. For a complex industrial machine, such as the rivet setting tool 10 illustrated in Figure 2 and 3, the transition paths may be in the order of hundreds, making it difficult for the operator to properly diagnose the working of the industrial machine.

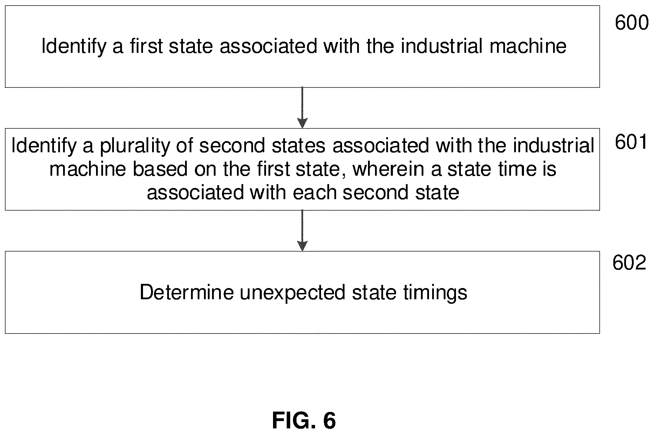

There will now be described, with reference to Figure 6 a method for diagnosing an industrial machine such as a rivet setting tool illustrated in Figure 3 based on the information associated with a current and previously active states of a state machine modelling the operations of the industrial machine as illustrated in Figure 5.

In Figure 6, a flowchart showing processing for performing diagnosis of an industrial machine is illustrated. At step 600, a first state associated with the industrial machine is identified. The first state identified is the currently active state of a state machine modelling the functions of the industrial machine. For example, with reference to the state machine 500 illustrated in Figure 5, if the currently active state is the "Feed Active" state S2, then state S2 will be the first state associated with the industrial machine such as the rivet setting tool. Once the first state associated with the industrial machine is identified, processing passes from step 600 to step 601 where further processing is performed to obtain information associated with the first state.

At step 601, processing is performed to identify one or more second states associated with the industrial machine based on the first state. A second state is a state of the state machine that was active at any point in time before the state machine transitioned to the first state. That is, a second state is a state that the state machine transitioned through to arrive at the first state. For example, referring to the state machine 500 described in Figure 5, if the "Feed Active" state S2 is the currently active state, the second states may be either "Ready" state S1 or "Feed Pause" state S4 depending on the transition path followed by the state machine 500 to arrive at the "Ready" state S1.

A state time is associated with each of the second states. The state time associated with a second state is the point in time at which the state machine transitioned to the second state. The state time associated with a second state can be obtained by means of a timer associated with the industrial machine. The timer may be a global timer that synchronises all the operations of the industrial machine. That is, the global timer may be the timer that is used to measure time for each aspect of the industrial machine, and allow operations in disparate parts of the system to be compared in time.

After the plurality of second states and a state time associated with each of the second states are identified, the processing passes from step 601 to 602. At step 602, it is determined whether the state machine spent an unexpected amount of time in any of the second states using a state time threshold for, and the state time associated with, the second states. A state time threshold for a second state indicates a time that the industrial machine is expected to spend carrying out a set of actions associated with that second state. As such, where one of the at least one second times is different to an expected state time for that second state this may indicate a fault, or that the performance of the industrial machine is lower than an expected performance. For example, where the at least one second times exceeds the state time threshold for that second state, this may indicate a fault, or that the performance of the industrial machine is lower than an expected performance. It will be appreciated that the time spent by the industrial machine in a second state may be determined as the time period between the state time associated with the second state and a state time associated with the next state to which the industrial machine transitions.

Considering the state machine illustrated in Figure 5, the complete feed process for a rivet setting tool 10 is determined by a number of state transitions between leaving the Ready State S1 and entering the Finished State S6. If the global time when the Feed Active State **S2** was entered from the Ready State **S1** was tm1, and the global time the finished state **S6** was entered was given by tm2, then the time period during which the feed process was active can be determined as (tm2-tm1). If the time threshold associated with the feed process is th1, and if (tm2-tm1) is greater than th1, it can be determined that feed control logic of the rivet setting tool 10 has spent more time than has been previously determined to be necessary to carry out a rivet feed operation and that there may therefore be a fault in the system. Consequently, the timing associated with the state machine in Fig 5 can be analysed to identify the fault in the operation of the rivet setting tool 10.

As described above, however, the number of states and the speed with which an industrial machine transitions between states is such that simply displaying the state transitions as they occur may be insufficient to allow timely identification of a particular fault. This problem is exacerbated by the interfaces that are typically provided for use with industrial machines. For example, in order to ensure that costs are appropriate, industrial machines are generally provided with displays that have a relatively slow refresh rate compared with displays used in other computing devices. As a part of the processing described in Figure 6, the second states and the associated state times may also be stored. Optionally the first state and a state time associated with the first state can also be stored. In some embodiments, circular buffers provide a particularly beneficial mechanism for storing state times and the plurality of states so as to allow for diagnosis of an industrial machine.

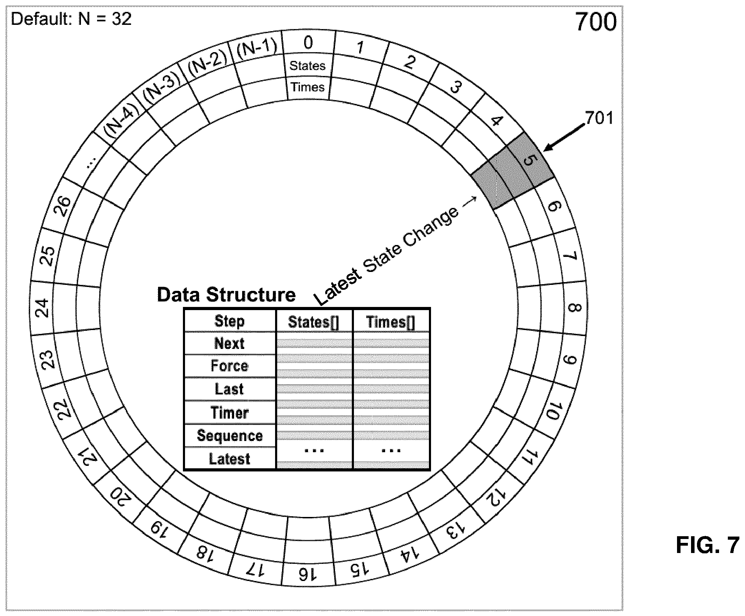

When diagnosing the operation of the machine, the sequence of states and state times can be extracted from the circular buffers 700 (Fig. 7) contained within corresponding state machine structure relative to the Latest state change pointer 701.

Tables 1-3 below show times spent in particular states of Figure 5,during a "normal", "slow" and "bad" feed process. As described above, each state transition is recorded along with the time that the state became active. Therefore the duration for which a specific state was active can be calculated by subtracting the time the state was entered from the time the next state was entered. The latest state entry time can be subtracted from the current global timer value to determine how long the current state has been active.

**Table 1 - Normal Feed**

| | **State (N-2)** | **State (N-1)** | **Latest (N)** |
|---|---|---|---|
| **State** | Ready (S1) | Active (S2) | Finished (S6) |
| **Time In State** | 3s | 0.4s | Increasing |

**Table 2 -Slow Feed (Multiple feed pulls):**

| | **State (N-4)** | **State (N-3)** | **State (N-2)** | **State (N-1)** | **Latest (N)** |
|---|---|---|---|---|---|
| **State** | Ready (S1) | Active (S2) | Pause (S4) | Active (S2) | Finished (S6) |
| **Time In State** | 5s | 1s | 0.25s | 0.6s | Increasing |

**Table 3 - Bad Feed (Time out on last feed pull):**

| | **State (N-6)** | **State (N-5)** | **State (N-4)** | **State (N-3)** | **State (N-2)** | **State (N-1)** | **Latest (N)** |
|---|---|---|---|---|---|---|---|
| **State** | Ready (S1) | Active (s2) | Pause (S4) | Active (S2) | Pause (S4) | Active (S2) | Faulted (S5) |
| **Time In State** | 4s | 1s | 0.25s | 1s | 0.25s | 1s | Increasing |

It can be seen from the table 1 that the normal feed involved a transition from the Ready state S1 to the Active state S2. The system spent 0.4 s in the Active state S2 before transitioning to the Finished state S6. In contrast, the Slow Feed (table 2) involved a first transition to the Active state S2, followed by a transition to the Pause state S4, and a second transition to the Active state S2 before transitioning to the Finished state S6. The total time spent in the Active state during the Slow Feed example was 1.6 s. Finally, in the Bad Feed example (table 3), the system entered the Active state S2 a total of three times, each for 1 s, before finally transitioning to the Fault state S5, without completing the feed pull.

Referring to Figure 7, for each state machine which requires enhanced diagnosis, a data structure may be stored, which may containing the following information:
**Step** - This value represents the current state.

**Next** - This value is set prior to calling the state machine handler function to request a transition from one state to another. This will cause the updating of the Step, Sequence and **Last** variables as well as resetting of the Timer, and storing the new state and global transition time into the history buffers and updating the history pointer. This value would be assigned a value based on the control logic whenever a transition condition occurs, (such as transitions t1 to t15 in state machine 500), to step the state machine to the next state of its operation.

**Force** - As described below, techniques described herein may enable an operator to manually reset a state machine to a desired state. The Force value, when not set to "inactive", will overwrite the **Next** value when the state machine handler function is called, to force a state transition, after which it is made inactive once more, with this forced state transition being stored in the state history buffer.

**Last** - Prior to changing state the current state value is stored for ease of future reference, as it is often useful to determine actions from within a state based on the state from which it transitioned.

**Timer** - This value represents the time the current state has been active, and will be incremented each time the state machine handler logic is executed. This value may be used for ensuring minimum times before state transitions, or to trigger time based events such as faults.

**Sequence** - Each time the state value changes, it is shifted into the lowest 8 bits of this 32-bit value, with the other data within the 32-bit value shifting similarly. Thus, this single variable holds the current and past three states which have been active. This is particularly beneficial for displaying previous states on user interface displays.

**Latest** - Each monitored state machine has two circular buffers (depicted by the inner and middle rings in Figure 7) which hold the state number and times the states were entered for a number of state transitions. The Latest value is a pointer into these arrays which stores the latest state transition, and is used to track backwards through the history data as needed for analysis.

The depicted **States□** and **Times□** values provide the circular buffers for the current and previous states and associated times, also depicted schematically in Figure 7. It will be appreciated that while conceptually and functionally, the state and state time history buffers are provided by circular buffers, any appropriate underlying data structure may be used, such as arrays.

The circular buffers 700 in Figure 7 comprise 32 segments for each of the states and associated state times. However, it will be appreciated that the circular buffers may comprise any number of segments. Each pair of corresponding segments of the circular buffers are capable of storing a state number and an associated state entry time. The circular buffer 700 comprises a pointer 701 pointing to a memory location of a segment of the circular buffer 700. Initially, when the industrial machine is not in operation, the pointer 701 points to segment 0. When the industrial machine begins its operation, the state machine modelling the operations of the industrial machine transitions from a default state to another state depending on the transition or exit condition performed by the industrial machine as described above. Thereafter, the pointer 701 is incremented to point to the next storage segment of the circular buffer 700 and the number of the state and the state time associated with the state are written into the segment of the circular buffer 700 to which the pointer 701 points.

An alternative to the history structure discussed above, would be to store the current state number and the time the state had been active into the history buffer at the time a state transition occurred. This may be used, for example, in systems where a global timer is not available, or where simpler handling of the individual state active times is preferred. Both methods provide similar information, although synchronizing the data across multiple state machines or other diagnostic functions may not be as easy if the global timer is not used.

Considering the state machine 500 illustrated in Figure 5, when the state machine 500 transitions from a being in one state to being in a another state, the pointer 701 is incremented and the new state number and the value of the global system timer are written into the segment entries pointed to by pointer 701.

Thereafter, the determination, at step 601 of Figure 6, of second states and associated state times may be performed by straightforwardly decrementing the value of the pointer 701, wrapping around if it becomes less than zero. Additionally the second states and the state times may be displayed to the operator so that the operator can identify a second state which has exceeded a time threshold.

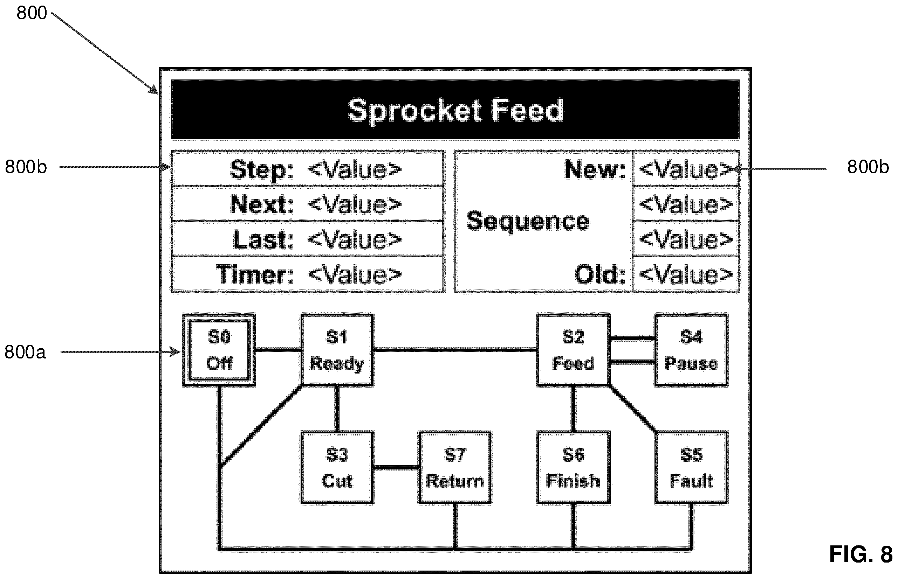

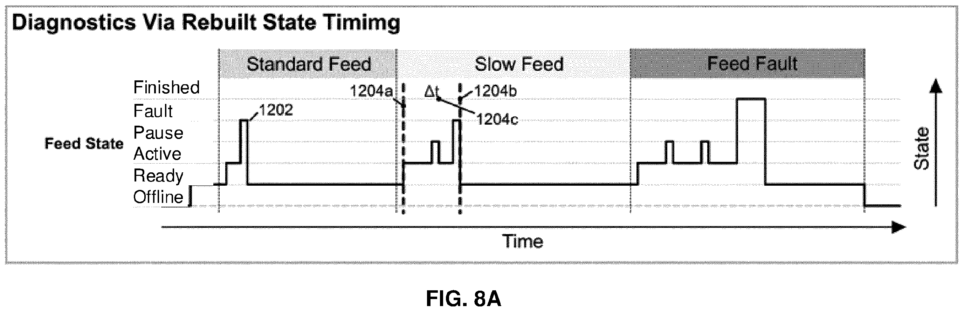

Figure 8 illustrates an example diagnostic display 800 that may be provided to an operator after the processing described above with reference to Figure 6 has been performed. The display 800 comprises a simplified logic flow diagram 800a which depicts the association between a plurality of states in the state machine 500. The currently active state may be visually highlighted within the logic flow diagram 800a via a colour change or other method, while the initial state is depicted by the double-box around state S0.

In a portion 800b of the display 800, the currently active state, the requested ('Next') state after the currently active state, which will typically be the same as the current state, the state before the currently active state and the state time associated with the currently active state is displayed. If the currently active state of state machine 500 is state S4 then the portion 800b will display the value of "Step" as "S4", "Next" as "S4", "S2" or "S0" depending on the whether a state transition was active, "Last" as "S2" and "Timer" as the state time of state S4. In a portion 800c of the display 800, the transition path followed by the state machine to arrive at the currently active state is displayed. When the currently active state of the state machine 500 is state S4, for example, the transition path displayed in the portion 800c may be S0 (Old), S1, S2 and S4 (New).

The display 800, thereby, provides the operator with information regarding an internal state of the industrial machine and a technical condition or an event which is related to the internal state. Any change in the internal state of the state machine is automatically detected and presented to the operator prompting the operator to interact with the system, such as identifying and resolving faults in the system.

For example, the display 800 provides the operator with information regarding the currently active state of a state machine modelling the operations of an industrial machine along with the transition path followed by the state machine to arrive at the currently active state and the state time associated with each of the states in the transition path. By using on the display 800, the operator can identify a state in the transition path of the state machine in which the industrial machine operated for a longer time than expected. As such the operator can diagnose faults in the industrial machine by analysing the actions associated with the state.

Additionally, if the industrial machine is deadlocked in a particular state, the display 800 also allows the operator to force the industrial machine to transition to a different state. For example, the 'Next' entry in section 800b of display 800 may be modifiable to force a state jump, to either remove a deadlock within the system or to trigger actions associated with a particular state. That is, for example, if the system is deadlocked in the "Feed Pause" state S4, the operator can force the state machine to transition to the state S2, or state S0. In some instances, the operator can make a decision on which state to force the industrial machine to transition to based on the logic flow diagram of the state machine 800a. While in Figure 8, it is the "Next" entry in section 800b that enables an operator to force a state jump or transition by setting the **Force** state structure variable, it will be appreciated that this functionality may be provided by another user interface elements (e.g. another user interface depicted in Figure 8, or a user interface not depicted in Figure 8). The display 800 thereby assists the operator in both identifying and resolving faults in the functioning of the industrial machine.

Further visualisations of the state transitions may be provided. Determining errors may be facilitated if state transitions are processed to provide a representation 1202 as shown in Figure 8A, where the x-axis represents time, and the y-axis the active step number. On the types of interfaces provided for use with industrial machines, it may not be possible to easily determine a time between two points on the representation 1202. In this regard, logic analyser style cursor functionality 1204a and 1204b may be provided, each of which can be moved by an operator along the display 1202. The system may automatically calculate and output the time period indicated by the cursors 1204a, 1204b, enabling an operator to more easily determine times that the state machine spent in particular states.

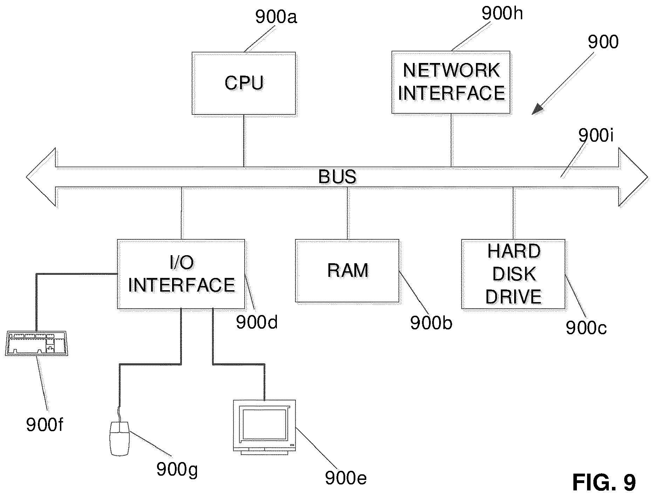

Figure 9 shows a computer 900 suitable for performing, viewing and diagnosing the functions of a state machine in further detail. The computer 900 may be considered to be a diagnostic system. It can be seen that the computer 900 comprises a CPU 900a which is configured to read and execute instructions stored in a volatile memory 900b which takes the form of a random access memory. The volatile memory 900b stores instructions for execution by the CPU 900a and data used by those instructions.

The computer 900 further comprises non-volatile storage in the form of, for example, a hard disc drive or a solid state drive 900c. The computer 900 further comprises an I/O interface 900d to which is connected peripheral devices used in connection with the computer 900. More particularly, a display 900e is configured so as to display a graphical representation of the state machine or any output from the computer 900. Input devices are also connected to the I/O interface 900d. Such input devices may include a keyboard 900f and a mouse 900g, or a touchscreen attached to the display 900e, which allow operator interaction with the computer 900. The input devices (900f, 900g and 900e) allow an operator to interact with the system 100. The I/O interface 900d may additionally be connected to one or more sensors of the industrial machine. For example, where the industrial machine is a rivet system, the I/O interface 900d may be connected to a tape position sensor, a rivet presence sensor (such as the sensor 300i), etc.

A network interface 900h allows the computer 900 to be connected to an appropriate computer network so as to receive and transmit data from and to other computing devices. The CPU 900a, volatile memory 900b, permanent memory (Disk/Flash) 900c, I/O interface 900d, and network interface 900h, are connected together by a bus 900i.

It will be appreciated that the arrangement of components depicted in Figure 9 is exemplary and that other arrangements may be used within the context of the techniques described herein.

A significant part of the sequencing of the state machine controlling an industrial machine is influenced by the status of the I/O signals associated with sensors and actuators of the system. Whilst the method for diagnosing an industrial machine has been described with regard to the actions associated with a state machine, it will be appreciated that techniques described herein can be used to diagnose a state machine based on the actions associated with a state machine, the I/O signals associated with the industrial machine, or indeed both.

However, the number of I/O signals received can be large and each I/O signal may persist for only a short duration. As described above, interfaces that are typically provided for use with industrial machines often have a relatively slow refresh rate compared with displays used in other computing devices, and the duration of the signals may be too short to recognize on the display. It is therefore desirable to provide diagnostic tools and methods that will work with existing interfaces and not require replacement with expensive interface hardware.

By way of example of one problem with standard diagnostic tools, if a sensor of an industrial machine provides an I/O signal (e.g. a high signal) for only 10ms when detecting a condition of interest, and the industrial machine is provided with a display (such as the display 900e) with a screen update rate of 100ms, then on average only one I/O signal in ten from that sensor might be displayed, and then only for a brief (100ms) duration which may be too short to detect. As such, an operator may miss signals which could provide advanced warning of faults and which could have allowed the operator to take remedial action before the fault developed or became critical. In some example implementations described herein, a diagnostic system may be configured to monitor, in addition to signals currently provided by a sensor, a state history of the sensor. The diagnostic system may be configured to provide a diagnostic output that allows an operator sufficient time to process events which may be representative of short duration faults and which may be used to aid continued and guided operation and maintenance of the industrial machine.

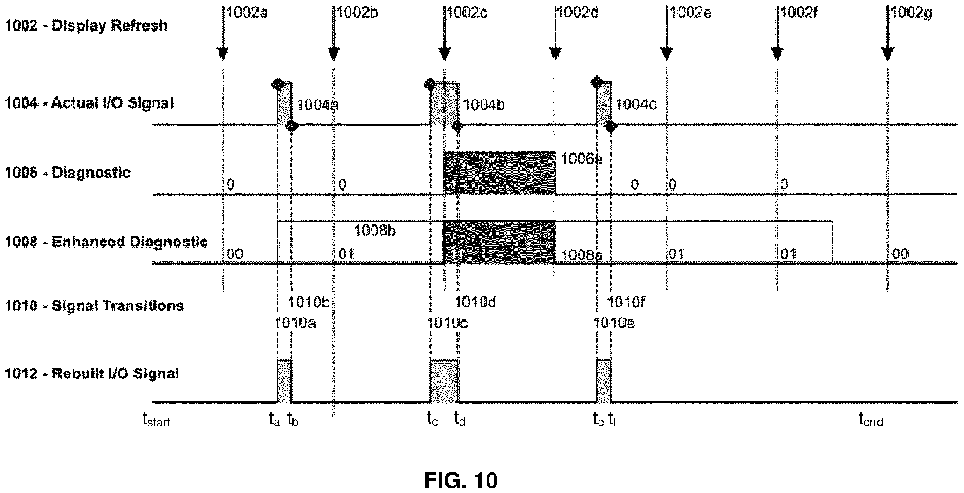

Figure 10 schematically depicts the generation of diagnostic information by a diagnostic system (such as the system 900) for an I/O signal from a sensor or actuator (not shown) of an industrial machine according to standard methods and an example of the generation of improved diagnostic information for the same I/O signal according to techniques described herein. In Figure 10, time is depicted from left to right on the page. Refreshes of the display (e.g. the display 900e) are depicted by arrows 1002, where each arrow 1002a-1002g indicates a respective refresh of the display. Shown below the refresh operations is an I/O signal 1004 received from the sensor of the industrial machine. Below the I/O signal 1004, there is shown a standard diagnostic output 1006 provided by a known method of displaying the current status of the signal at the time of the refresh. Beneath the diagnostic output 1006 is shown an enhanced diagnostic output 1008 generated in accordance with techniques described herein, and beneath the enhanced diagnostic output 1008 are the change of state events 1010a-1010f which may be optionally logged into a history data array together with the time tₐ-t_{f} the change occurred for later analysis and display.

Within the time period depicted in Figure 10, the signal 1004 comprises three periods 1004a-c during which the signal is high. For example, the signal may indicate the presence of a consumable component (e.g. a rivet) at a monitored location of the industrial machine. It will be appreciated that while the signal 1004 is depicted as being binary, the signal for which diagnostic information is generated may take any other form, and may be, for example, continuous, stepped, etc.

A first high signal period 1004a occurs after the refresh 1002a but before the refresh 1002b. The diagnostic information 1006 indicates to the operator the nature of the signal 1004 at the time of the last display refresh operation. At the time of the refresh operations 1002a and 1002b the signal 1004 is low, such that, following the refresh operation 1002b, the diagnostic information 1006 indicates the presence of a low signal. As such, it can be seen that no useful diagnostic is provided by the diagnostic information 1006 to the operator in relation to the high signal 1004a. Given the potentially large number of sensors being monitored, and the speed with which signals are received, it will be appreciated that if the high signal 1004a presaged a fault in the industrial machine, the diagnostic information 1006 would not aid an operator in identifying or diagnosing that fault.

A second high signal period 1004b overlaps the time of refresh 1002c. As such, diagnostic information 1006a is provided to the operator to indicate the high signal 1004b. The diagnostic information 1006a persists until the next refresh 1002d, at which time the signal 1004 is low, such that the diagnostic information 1006 reverts to indicating that the signal 1004 is low. A final high signal 1004c is received after the refresh 1002d but ends before the refresh 1002e. As such, the diagnostic information 1006 provides no information in respect of the high signal 1004c as the single high output 1006a covers both events.

To generate the enhanced diagnostic signal 1008, the diagnostic system is configured to maintain state change information for the signal 1004 for a specified duration of time. On a signal state change (represented by diamonds in Figure 10), a state indicator is updated to reflect the change in state. The state indicator may be stored in the memory 900b of the diagnostic system 900.

The state change update persists for a predetermined period of time, typically in the order off 1 to 2 seconds, shown as equal to two refresh periods, or 200ms in figure 10, sufficient to allow an indication of the change in state to be included in the enhanced diagnostic signal 1008. It will be appreciated that the state indicator may take any appropriate form, but for binary signals such as the signal 1004 shown in Figure 10, the state indicator can be conveniently and efficiently take the form of a single bit added to the standard diagnostic bit. It will further be appreciated that the length of time for which the indication persists will depend upon the nature of the signal received from the I/O device and also on the refresh rate of the display device.

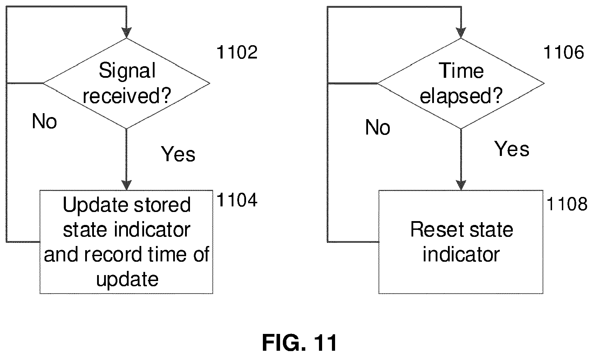

By way of example, with reference to Figures 10 and 11, the enhanced diagnostic signal comprises a first part 1008a and a second part 1008b. The first part of the diagnostic signal 1008a indicates the current value of the state indicator for the I/O signal (or the value at the last refresh point) and can be sampled in the same way as the standard diagnostic 1006, while the second part 1008b indicates whether the signal 1004 had changed during a period of time preceding the display refresh operation and is sampled along with the standard diagnostic state 1008a. With reference to Figure 11, there is shown processing performed by the diagnostic system to maintain the state indicator. It can be seen that the processing has two parts, each of which operate substantially contemporaneously to update the state indicator for the I/O device. At a step 1102, the diagnostic system determines whether a state change occurs. It will be appreciated that while depicted as a determination in Figure 11, the mechanism of determination may be either active (e.g. "pull") or passive (e.g. "push"). The processing of step 1102 executes until it is determined that the signal from the I/O device has changed, at which time processing passes to step 1104 and the state indicator is updated to reflect the change. Processing passes from step 1104 back to step 1102 which continues to monitor for changes in the I/O signal. At the same time, the processing at step 1106 determines whether a predetermined time period has elapsed since the state indicator was last updated (based on the last time recorded at step 1104). Processing remains at step 1106 while the determination is negative. Upon determining that the predetermined time has elapsed since the state indicator was last updated, processing passes to step 1108 at which the state indicator is reset to a default state.

The processing of Figure 11 is now described by way of example with reference to Figure 10. Prior to the first high signal 1004a, the state indicator is in a default state, in this case indicating that the signal 1004 is low. This is depicted in Figure 10 by the enhanced diagnostic signal 1008 indicating a low. Upon the high signal 1004a, it is determined at step 1102 that the signal has changed and processing passes to step 1104, at which the state indicator is updated to indicate the receipt of a high signal and the time of the update is recorded. Processing passes from step 1104 back to step 1102.

It is assumed for the purposes of the present example that, between the receipt of the high signal 1004a and the high signal 1004b, the processing of step 1106 determines that the predetermined time period has not elapsed, such that processing remains at step 1106. As such, at the time of the refresh operation 1002b, the predetermined time period has yet to elapse, such that the state indicator still indicates that a high signal has been received. The enhanced diagnostic signal is configured to indicate the state of the state indicator such that, on the refresh operation 1002b, a portion 1008a of the enhanced diagnostic signal 1008 is updated to indicate a high signal. For clarity of depiction and distinction with the diagnostic signal 1006a, the part 1008a is shown as a single line (rather than a filled block), although it is to be understood that Figure 10 is merely schematic and depicts the informational content of the enhanced diagnostic, rather than any particular way of displaying that information. Like the diagnostic signal 1006, the enhanced diagnostic signal 1008 also comprises a part 1008b that indicates a current value of the I/O signal 1004. As such, while the high signal on the I/O signal 1004 has ended, the operator is still able to determine that the signal 1004a was received but has passed before the most recent refresh of the display.

As discussed above, the second high signal 1004b temporally coincides with the refresh operation 1002c, such that the second portion of the enhanced diagnostic signal 1008b is updated to reflect the current state (at the time of refresh) of the I/O signal 1004. Additionally, the processing 1102 will determine that the signal 1004b was received and, at step 1104, the state indicator will be updated (or maintained in this case) and the time of the update recorded.

It is assumed for the purposes of the present example that, between the receipt of the high signal 1004b and the high signal 1004c, the processing of step 1106 determines that the predetermined time period has not elapsed, such that processing remains at step 1106. As such, on the next refresh 1002d, the enhanced diagnostic signal still indicates that a high signal was received, but now indicates that, at the time of the refresh 1002d, the I/O signal was low.

It is assumed for the purposes of the present example that, between the receipt of the high signal 1004c and the refresh 1002e, the processing of step 1106 determines that the predetermined time period has elapsed, such that processing passes from step 1106 to 1108 and the state indicator is reset to the default state. As such, at the refresh 1002e, the enhanced diagnostic signal 1008 is updated such that both parts 1008a, 1008b indicate a low value.

It will be appreciated from the above that by recording an indication of changes in the state for predetermined period of time, a diagnostic signal can be provided to an operator that allows the operator to more accurately diagnose current and past states of I/O signals within an industrial machine and, therefore, to more accurately and timely diagnose faults or possible faults within the industrial machine.

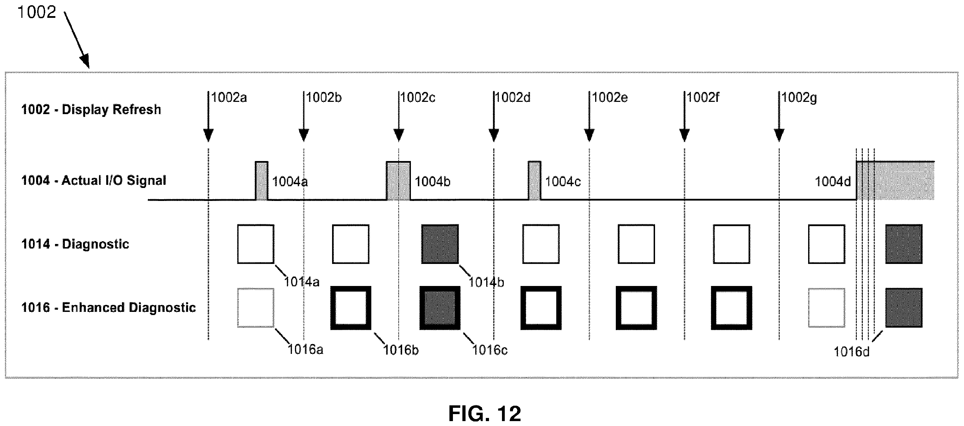

Figure 12 depicts one example of a way in which the enhanced diagnostic signal 1008 could be displayed to an operator of an industrial machine. Figure 12 depicts the same I/O signal 1004 and refresh operations 1002 as depicted in Figure 10, but shows how those signals may be displayed on a standard diagnostic indicator lamp 1014 and an enhanced diagnostic indicator lamp 1016 on a graphical Human Machine Interface (HMI). In particular, it can be seen that the standard diagnostic indicator lamp operates in one of two modes: either 'off' 1014a, or 'on' 1014b. The standard diagnostic indicator lamp is therefore able to represent the information provided by the diagnostic signal 1006. In contrast, however, an enhanced diagnostic indicator may be provided that has four modes of operation: a 'static off' mode 1016a indicating that the I/O signal 1004 is low and that no high signal has been received within a past predetermined time period, a 'changed off' mode 1016b indicating that the I/O signal 1004 was low, but that change of state was active within the past predetermined time period, a 'changed on' mode 1016c indicating that the signal was high during the last refresh, and the signal change occurred during the past predetermined time period, and a 'static on' mode 1016d indicating that the I/O signal 1004 was high at the last refresh and has not changed during the past predetermined time period. In the example of Figure 12, the 'changed' status is provided by a thicker outer ring surrounding the indicator lamp, although it will be appreciated that any means for displaying the additional diagnostic information may be used, and the on/off state for the last refresh is shown via the interior colour of the indicator lamp.

The actual I/O signal 1004 may be reconstructed from the diagnostic change of state data, and provided as rebuilt I/O signal 1012, on the user interface. In particular, the diagnostic history may be used to display the signal changes by drawing a number of lines representing the state of the signal. The horizontal coordinate of a line would correspond to the relative position of the time the signal changed compared to the display start (tₛₜₐᵣₜ) and end time (t_{end}), and the vertical coordinate would be dependent on the state of the signal during that period. For example, to display the rebuilt I/O signal 1012 shown in Figure 10, thirteen lines may be drawn, with seven horizontal lines between the various time values (tₛₜₐᵣₜ, t₁-t₆, and t_{end}) with a position defined by the signal status at the start of each period, and six vertical lines representing the changes of state at tₐ-t_{f}. The display of which is not outside the capabilities of off-the-shelf programmable HMIs.

The lamp 1016 may be provided by, for example, one or more bulbs (such as LEDs) or may be part of a user interface generated on a display device such as an LCD display device. Similarly, while the above is described with reference to the system 900, it will be appreciated that the processing described with reference to Figure 11 may be implemented in any convenient way including by way of one or more FPGAs or ASICs.

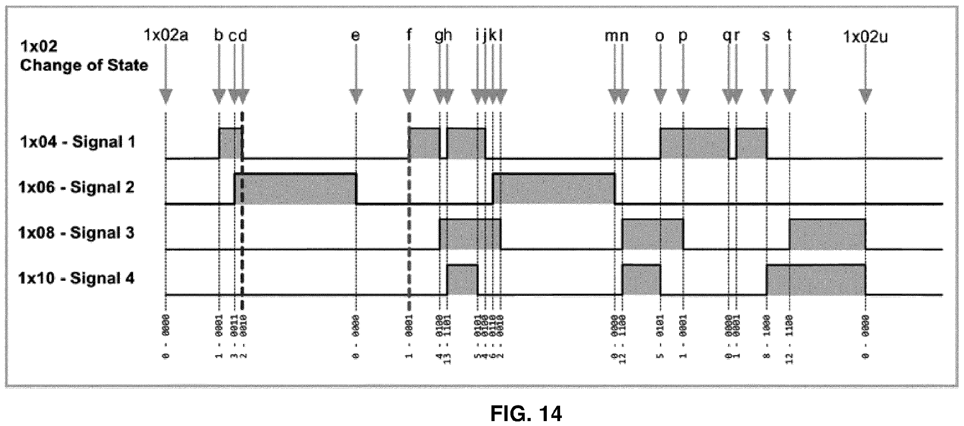

To minimize the processing load imposed on the system when monitoring a large number of I/O signals, in some implementations, the data is not inspected on a signal by signal basis, but inspected for a group of signals in parallel, as shown (for an example of a 4-bit value) in Figure 14. In some applications, the I/O signals can be combined into 8-bit, 16-bit, 32-bit or larger values, and the changes in these combined values (rather than changes in individual signals) stored in a history array, together with time stamps. In general, the larger the number of bits being monitored, the larger the history array that will be required. For many applications, a 128-element array would be sufficient to log the changes to 32 signals.

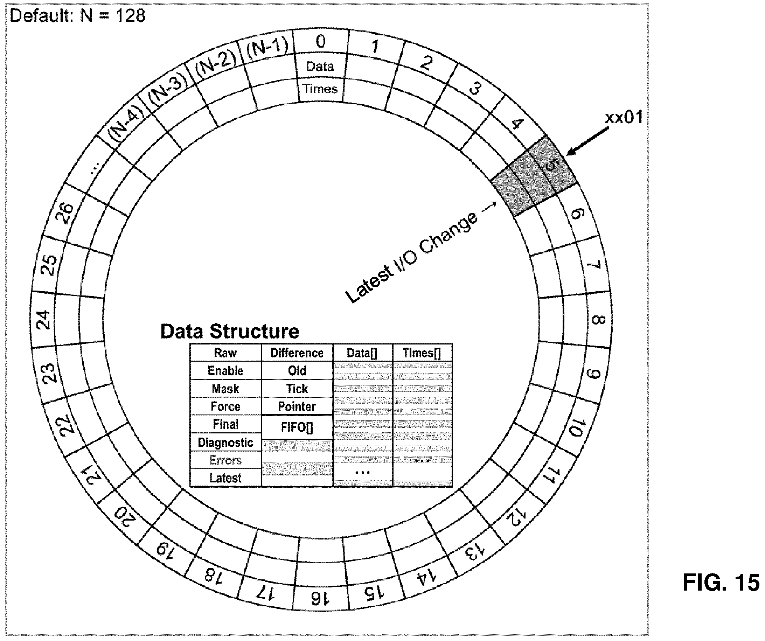

To enable for fast and efficient retrieval and use of diagnostic data, the combined I/O signal value may be stored in a history ring buffer, as shown in Figure 15. Operation of the I/O signal change buffer may be of a similar manner to that described with reference to Figure 7 in connection with the state machine data. The I/O signal change buffer may store entries for the I/O signal data (or combined I/O signals as described above) and the times of those changes. The times of the I/O signal changes may be recorded using the same global timer as for that of the state machine buffer 700, whenever the I/O signal value (or combined I/O signal value) changes from a previous value.

To minimize the amount of computation needed to enable display of a diagnostic signal that can be viewed in real-time, a diagnostic output signal may be stored within diagnostic history buffer. For example, the diagnostic history buffer may comprise a further First-In-First-Out data structure (diagnostic FIFO). The diagnostic FIFO may be updated in parallel with the updating of the I/O signal change buffer. A pointer into the diagnostic FIFO determines a current diagnostic output (i.e. the current "slot" of the diagnostic FIFO is output), with the pointer incrementing after a predetermined "diagnostic tick" time period (and wrapping after incrementing through each of the slots). The diagnostic tick may be determined based upon the diagnostic HMI display or refresh period (commonly, e.g., 2 seconds) and the number of slots in the diagnostic FIFO. For example, the diagnostic tick may be the sum of the diagnostic display period and the number of slots, for example with a 2s diagnostic update and four FIFO slots, each slot would be displayed for 0.5s.

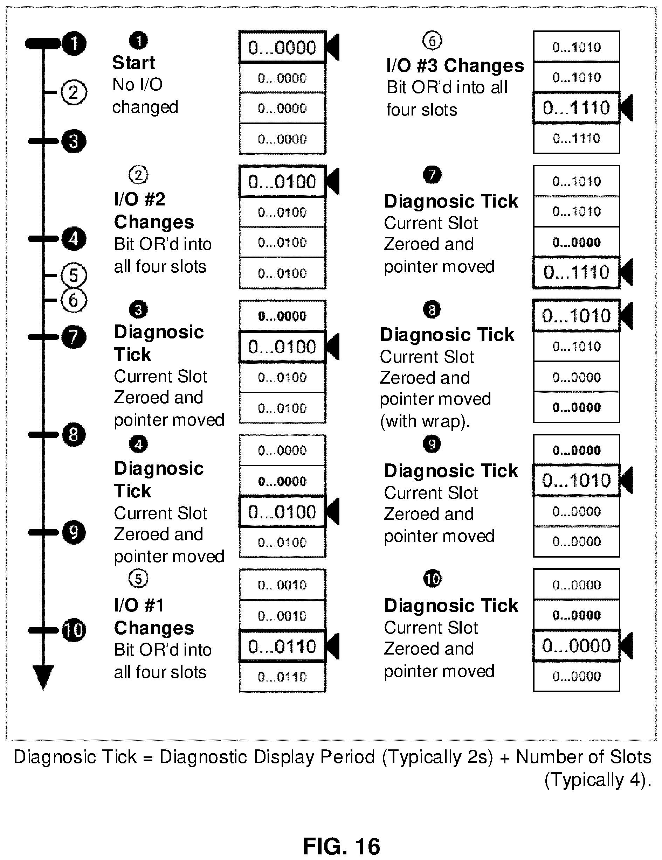

Referring again to the example depicted in Figure 14, a subset of four I/O signals (Signal 1 - Signal 4) is combined into a single diagnostic value with a respective bit for each I/O signal (depicted most clearly and described below with reference to Figure 16). Any change to this single diagnostic value within a specified period is used to modify the data included in the diagnostic FIFO buffer, and therefore the diagnostic signal that is output to the operator. In particular, when the single diagnostic signal changes (e.g. as shown in Figure 14) as detected by the binary XOR result of the current and previous I/O value, if this value is non-zero then it is logically OR'd into each of the slots of the diagnostic FIFO. This ensures that any change to one of the monitored I/O signals, no matter how fast it occurred, is able to be displayed, even on a slower refreshing Human Machine Interface, for a minimum period of three time periods. On each diagnostic tick (i.e. with a predetermined frequency), the data stored in a current slot is decayed (for example, the current slot may be zeroed), the pointer into the diagnostic FIFO is incremented and the current displayed diagnostic is set to the newly indexed slot. This ensures a single change of state will be displayed for a longer period of time (and up to four diagnostic ticks).

Using this method, the diagnostic display for 32 (or more) signals can be performed using a four slot diagnostic FIFO array, a pointer variable and a single timer, while imposing a relatively light load on the system (particularly given that the diagnostic value will have been previously generated to determine whether a new historical value (and associated time) is required to be stored into the I/O change buffer.

Figure 16 depicts an example of changes in the diagnostic signals stored within the diagnostic FIFO for a set of four signals (signals #0-#3) over a period of time indicated by the vertical timeline on the left hand side of the figure. With reference to Figure 16, it can be seen that at a first time period (1), no changes to the monitored I/O signals have occurred, and the value in each slot of the diagnostic FIFO is '0000'. The currently indexed slot is slot zero. At time (2), a change in signal #2 results in the bit corresponding to signal #2 in the combined I/O signal value being set high. The newly set bit value is OR'd into all slots of the diagnostic FIFO. The diagnostic output is therefore now '0100'. A diagnostic tick occurs at time (3), causing the currently indexed slot to be zeroed, and the pointer updated to slot one. The diagnostic output is still '0100'.

At time (4), a further diagnostic tick occurs, causing slot one to be zeroed, and the pointer incremented to slot two. The diagnostic output remains '0100'. At time (5), a change in I/O signal #1 causes the bit corresponding to I/O signal #1 to be set high, and the newly set bit is OR'd into all slots of the diagnostic FIFO. Slots zero and one therefore take the value '0010', while slots two and three have the value '0110'. The diagnostic output is therefore '0110'. At time (6), a change in I/O signal #3 results in the bit corresponding to I/O signal #3 to be set high and the newly set bit OR'd into each slot of the FIFO. Slots zero and one therefore store '1010' while slots two and three store '1110'. The diagnostic output is therefore '1110'.

At time (7) a diagnostic tick zeroes currently indexed slot two, and increments the pointer to slot three. The diagnostic output therefore remains '1110'. At time (8), a diagnostic tick zeroes the slot three, with the pointer wrapping back to slot zero. The diagnostic output is therefore now '1010'. At time (9) a further diagnostic tick zeroes slot zero, and increments the pointer to slot one, such that the diagnostic output remains '1010'. At time 10, a diagnostic tick zeroes slot one and increments the pointer to slot two. The diagnostic output (and indeed the value in all of the slots of the diagnostic FIFO) is now '0000'.

Using the historical change data stored for the various state machines, and I/O within the system being diagnosed, it is possible to monitor the operation of the machine to determine via comparison to data extracted when the system was running at the optimal performance, where variations within the process were occurring.

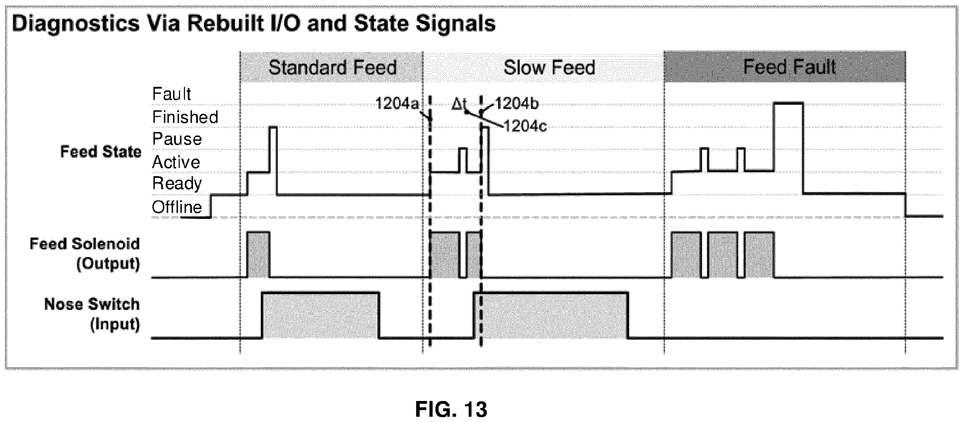

Referring to Figure 13, the sprocket feed state machine 500, described above, is displayed together with a feed solenoid output signal and a nose switch input signal. The display of Figure 13 is generated from the various change of state events stored in the respective histories of the sprocket feed state machine, the feed solenoid output and the nose switch input signal. Because each were stored with a global time reference value, signals from various sources within the system may be displayed between any two time indexes depending on the amount of data available. In Figure 13 for example, it is possible to see the variation within the data caused by a normal, slow, or faulted feed process, as the human eyes and brain are especially adapted to picking out patterns in this type of data display. In some implementations, movable cursor lines 1204a and 1204b are overlaid on the output to select and display time intervals between different operations within the system. The cursors may automatically snap to the time the state or I/O signals changed to make user interaction more efficient.

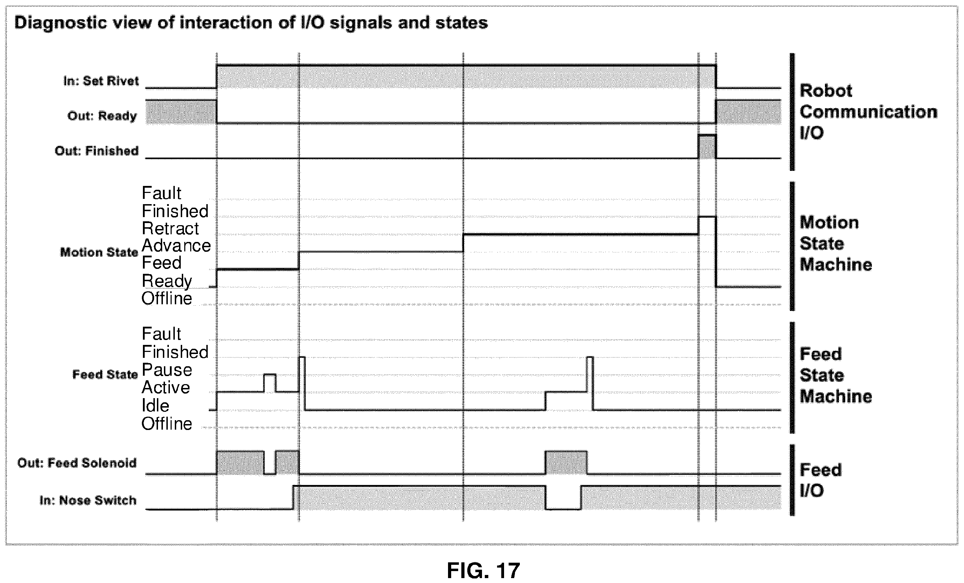

In some example arrangements, occurrence of a fault condition may automatically trigger generation of a copy of the contents of all the relevant state machine and I/O signal data histories, together with their corresponding time stamps each time a fault condition occurred. In this way, a maximum amount of the status of the system in the time just prior to the fault occurring is able to be captured for analysis. Referring again to Figure 13, the data for the depicted display may be derived from a single source, but as all the data within the system is time stamped using a synchronized time value, it would be possible to show how a change in any monitored signal or state could be visually inspected in reference to any other monitored signal or state within the system. In the example shown in Figure 17, it can be seen that the I/O history changes may be viewed together with the state machine history for multiple different parts of an industrial system on a common display. It should also be noted that the control and status signals passing between the controlled systems, in this case a riveting system, and the controlling system such as a robot or industrial controller, may also be treated as I/O signals and handled using the same methods as the internal I/O. This allows the timing interaction between the various state machines and their associated I/O and control signals to be easily viewed.

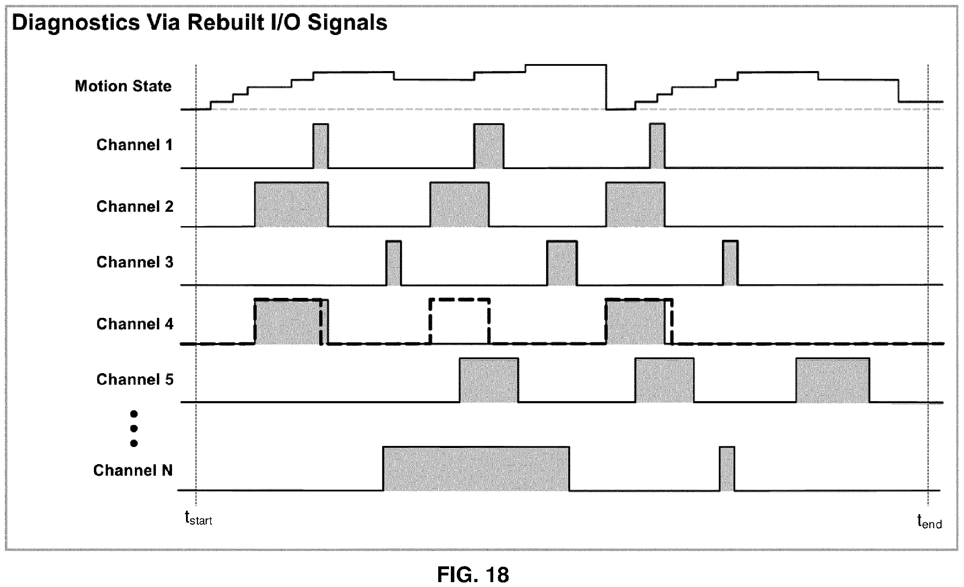

The techniques described herein further enable the overlay of signals from different time periods to more easily highlight the changes in the timing, as illustrated in Figure 18. This allows the variations within a complex sequence of operations to be visualized more easily, and the causes for faults and also variations which indicates the operation of the system is degrading to be determined quickly. This analysis can be performed on the machine using a built in user interface, or the data transferred to a remote diagnostic system with enhanced capabilities. These comparisons could be scheduled automatically to ensure the machine was operating at the optimum performance level, and to minimize the number of unplanned downtime events.

Visualizing the operational changes in parts of the system over time would also allow the performance of non-critical components to be evaluated more easily, and to extend the PM duration or replacement period based on the actual performance. Most parts operating within their nominal performance limits do not need excessive maintenance or other adjustments which may lead, to reduced performance, but conversely, components which have not met their PM levels which are showing signs of performance degradation within the system may benefit from being adjusted or replaced prior to their original limits to return the system as a whole to a more optimum performance level. Once maintenance has been performed on a component of the system the associated signals could be compared with both the initially specified performance, as well as the performance level just prior to the maintenance was undertaken. Optimizing the maintenance levels of a system will ensure the system as a whole is performing at the required levels with correct amount of maintenance, and also ensure the optimum installed life of the sub-components of the system.

Having now described some illustrative implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. Acts, elements and features discussed in connection with one implementation are not intended to be excluded from a similar role in other implementations or implementations.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any act or element being based on any information, act or element may include implementations where the act or element is based at least in part on any information, act, or element.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

The foregoing implementations are illustrative rather than limiting of the described systems and methods. Scope of the systems and methods described herein is thus indicated by the appended claims, rather than the foregoing description.

## Claims

1. A method for diagnosing faults in an industrial machine, comprising:
identifying (600) a first state associated with the industrial machine, the first state comprising a currently active state of a state machine modelling the functions of the industrial machine;
identifying (601) at least one second state associated with the industrial machine based on the first state, the at least one second state comprising a state of the state machine that was active at any point in time before the state machine transitioned to the first state;
for each identified second state, determining a state time associated with the second state;
determining (602) a fault indicator condition responsive to determining, based on the at least one second state and the respective state times, that the industrial machine spent a time period different to a predetermined time period in at least one of the at least one second states;
generating, responsive to determining the fault indication, diagnostic information comprising an indication of the one of the at least one second state; and
outputting the diagnostic information in a user interface of the industrial machine.

2. The method of claim 1, further comprising maintaining, during operation of the industrial machine, a history of states and associated state times, wherein identifying a second state and state time associated with the second state comprises identifying the second state and associated state time from the history of states and associated state times.

3. The method of claim 1 or 2, further comprising copying, responsive to determining the fault indicator condition, contents of a predetermined number of data entries in the history of states and associated state times.

4. The method of claim 1, 2 or 3, wherein the state time associated with each of the at least one second states is based upon a value of a global timer at a time of transition to the second state, wherein the global timer is used by the industrial machine to synchronise all operations of the industrial machine.

5. The method of any preceding claim, wherein the user interface further comprises generating an indication of a state history of the industrial machine, the state history comprising the currently active state of the industrial machine, a state that will be active after the currently active state, a state that was active before currently active state and state times associated with the currently active state.

6. The method of claim 5, wherein the user interface comprises an indication of a transition path followed by the industrial machine to arrive at the currently active state.

7. The method of any one of claims 5 or 6, further comprising providing in the user interface, a state-force user interface element, wherein selection of the state-force user interface element causes the industrial machine to transition to a predetermined state.

8. The method of claim 7, wherein maintenance, during operation of the industrial machine, of a history of states and associated state times continues after selection of the state force user interface element.

9. The method of any preceding claim, wherein generating a diagnostic output comprises processing the second state and state time information to generate an output indicating timing of state transitions.

10. The method of any preceding claim, further comprising:
identifying a change in an I/O signal (1004) associated with the industrial machine;
assigning to a state indicator associated with the I/O signal a value indicative of the change, the assignment configured to persist for a predetermined time period;
generating diagnostic information further comprising an indication of a current value of the I/O signal and a current value of the state indicator;
outputting a diagnostic output (1008) based on the diagnostic information in a user interface of the industrial machine;
wherein the generating diagnostic information is performed at each refresh interval of a human machine interface of the industrial machine.

11. The method of claim 10, wherein the predetermined time period is greater than a refresh rate of a human machine interface of the industrial machine.

12. The method of any one of claims 10 to 11, wherein outputting the diagnostic information in a user interface of the industrial machine comprises outputting the diagnostic information using an indicator having four modes of operation, the four modes of operation comprising:
a first mode indicating that the I/O signal is low and that no high signal has been received within a past predetermined time period,
a second mode indicating that the I/O signal is low, but that a change of state occurred within the past predetermined time period,
a third mode indicating that the I/O signal is high and a change of state occurred during the past predetermined time period, and
a fourth mode indicating that the I/O signal is high and has not changed during the past predetermined time period.

13. The method of any one of claims 10 to 12, wherein the I/O signal is one of a plurality of I/O signals, the state indicator associated with the I/O signal is associated with the plurality of I/O signals and the diagnostic information indicates changes to any of the plurality of I/O signals; and
the method further comprises maintaining a diagnostic signal history buffer for the plurality of I/O signals, the diagnostic signal history buffer configured to provide an historical indication of changes to any of the plurality of I/O signals;
wherein the diagnostic signal history buffer comprises a plurality of slots, each slot comprising an entry for each of the plurality of I/O signals and wherein each of the slots represents a state of the plurality of I/O signals at a different time in the past; and
wherein the diagnostic output is based on a slot of the diagnostic signal history buffer referenced by an index, wherein the index is updated to refer to a next one of the slots of the diagnostic signal history buffer with a predetermined frequency.

14. The method of claim 13, wherein the diagnostic information comprises a bit for each of the plurality of I/O signals and each slot of the diagnostic signal history buffer comprises a bit for each of the plurality of I/O signals and the method further comprises:
in response to generating diagnostic information indicating a change to at least one of the plurality of I/O signals, updating the value stored in each slot by logically combining the diagnostic information with the value stored in the slot; and
resetting the value of the currently indexed slot.

15. The method of any one of claims 13 to 14, wherein the predetermined frequency is based upon the sum of the number of slots in a diagnostic signal history buffer and a refresh period of a human machine interface of the industrial machine.

## Patentansprüche

1. Verfahren zum Diagnostizieren von Störungen in einer Industriemaschine, das Folgendes umfasst:
Identifizieren (600) eines ersten mit der Industriemaschine verknüpften Zustandes, wobei der erste Zustand einen gegenwärtig aktiven Zustand einer Zustandsmaschine, welche die Funktionen der Industriemaschine modelliert, umfasst,
Identifizieren (601) mindestens eines zweiten mit der Industriemaschine verknüpften Zustandes auf Grundlage des ersten Zustandes, wobei der mindestens eine zweite Zustand einen Zustand der Zustandsmaschine umfasst, der zu einem beliebigen Zeitpunkt aktiv war, bevor die Zustandsmaschine zu dem ersten Zustand überging,
für jeden identifizierten zweiten Zustand, Bestimmen einer mit dem zweiten Zustand verknüpften Zustandszeit,
Bestimmen (602) einer Störungsanzeigerbedingung als Reaktion auf ein Feststellen, auf Grundlage des mindestens einen zweiten Zustandes und der jeweiligen Zustandszeiten, dass die Industriemaschine einen von einem vorbestimmten Zeitraum unterschiedlichen Zeitraum in mindestens einem von dem mindestens einen zweiten Zustand verbrachte,
Erzeugen, als Reaktion auf ein Feststellen der Störungsanzeige, von Diagnoseinformationen, die eine Anzeige des einen von dem mindestens einen zweiten Zustand umfassen, und
Ausgeben der Diagnoseinformationen in einer Anwenderschnittstelle der Industriemaschine.

2. Verfahren nach Anspruch 1, das ferner das Verwalten, während des Betriebs der Industriemaschine, eines Verlaufs von Zuständen und zugehörigen Zustandszeiten umfasst, wobei das Identifizieren eines zweiten Zustandes und einer mit dem zweiten Zustand verknüpften Zustandszeit das Identifizieren des zweiten Zustandes und der zugehörigen Zustandszeit aus dem Verlauf von Zuständen und zugehörigen Zustandszeiten umfasst.

3. Verfahren nach Anspruch 1 oder 2, das ferner das Kopieren, als Reaktion auf das Feststellen der Störungsanzeigerbedingung, von Inhalten einer vorbestimmten Anzahl von Dateneinträgen in dem Verlauf von Zuständen und zugehörigen Zustandszeiten umfasst.

4. Verfahren nach Anspruch 1, 2 oder 3, wobei die mit jedem von dem mindestens einen zweiten Zustand verknüpfte Zustandszeit auf einem Wert eines allgemeinen Zeitgebers zu einem Zeitpunkt eines Übergangs zu dem zweiten Zustand beruht, wobei der allgemeine Zeitgeber durch die Industriemaschine verwendet wird, um alle Operationen der Industriemaschine zu synchronisieren.

5. Verfahren nach einem der vorhergehenden Ansprüche, wobei die Anwenderschnittstelle ferner das Erzeugen einer Anzeige eines Zustandsverlaufs der Industriemaschine umfasst, wobei der Zustandsverlauf den gegenwärtig aktiven Zustand der Industriemaschine, einen Zustand, der nach dem gegenwärtig aktiven Zustand aktiv sein wird, einen Zustand, der vor dem gegenwärtig aktiven Zustand aktiv war, und mit dem gegenwärtig aktiven Zustand verknüpfte Zustandszeiten umfasst.

6. Verfahren nach Anspruch 5, wobei die Anwenderschnittstelle eine Anzeige eines Übergangsweges umfasst, dem die Industriemaschine folgte, um bei dem gegenwärtig aktiven Zustand anzukommen.

7. Verfahren nach einem der Ansprüche 5 oder 6, das ferner das Bereitstellen, in der Anwenderschnittstelle, eines Zustandszwang-Anwenderschnittstellenelements umfasst, wobei die Auswahl des Zustandszwang-Anwenderschnittstellenelement veranlasst, dass die Industriemaschine zu einem vorbestimmten Zustand übergeht.

8. Verfahren nach Anspruch 7, wobei sich das Verwalten, während des Betriebs der Industriemaschine, eines Verlaufs von Zuständen und zugehörigen Zustandszeiten nach der Auswahl des Zustandszwang-Anwenderschnittstellenelements fortsetzt.

9. Verfahren nach einem der vorhergehenden Ansprüche, wobei das Erzeugen einer Diagnoseausgabe das Verarbeiten der Zweitzustands- und Zustandszeitinformationen umfasst, um eine Ausgabe zu erzeugen, die den Zeitablauf von Zustandsübergängen anzeigt.

10. Verfahren nach einem der vorhergehenden Ansprüche, das ferner Folgendes umfasst:
Identifizieren einer Änderung bei einem mit der Industriemaschine verknüpften E/A-Signal (1004),
Zuweisen eines Werts, der die Änderung anzeigt, zu einem mit dem E/A-Signal verknüpften Zustandsanzeiger, wobei die Zuweisung dafür konfiguriert ist, für einen vorbestimmten Zeitraum fortzubestehen,
Erzeugen von Diagnoseinformationen, die ferner eine Anzeige eines gegenwärtigen Wertes des E/A-Signals und eines gegenwärtigen Wertes des Zustandsanzeigers umfasst,
Ausgeben einer Diagnoseausgabe (1008) auf Grundlage der Diagnoseinformationen in einer Anwenderschnittstelle der Industriemaschine,
wobei das Erzeugen von Diagnoseinformationen bei jedem Aktualisierungsintervall einer Mensch-Maschine-Schnittstelle der Industriemaschine durchgeführt wird.

11. Verfahren nach Anspruch 10, wobei der vorbestimmte Zeitraum größer ist als eine Aktualisierungsrate einer Mensch-Maschine-Schnittstelle der Industriemaschine.

12. Verfahren nach einem der Ansprüche 10 bis 11, wobei das Ausgeben der Diagnoseinformationen in einer Anwenderschnittstelle der Industriemaschine das Ausgeben der Diagnoseinformationen unter Verwendung eines Anzeigers umfasst, der vier Betriebsmodi aufweist, wobei die vier Betriebsmodi Folgendes umfassen:
einen ersten Modus, der anzeigt, dass das E/A-Signal niedrig ist und dass kein hohes Signal innerhalb eines vergangenen vorbestimmten Zeitraums empfangen worden ist,
einen zweiten Modus, der anzeigt, dass das E/A-Signal niedrig ist, aber dass eine Zustandsänderung innerhalb des vergangenen vorbestimmten Zeitraums auftrat,
einen dritten Modus, der anzeigt, dass das E/A-Signal hoch ist und eine Zustandsänderung während des vergangenen vorbestimmten Zeitraums auftrat, und
einen vierten Modus, der anzeigt, dass das E/A-Signal hoch ist und sich während des vergangenen vorbestimmten Zeitraums nicht geändert hat.

13. Verfahren nach einem der Ansprüche 10 bis 12, wobei das E/A-Signal eines von einer Vielzahl von E/A-Signalen ist, der mit dem E/A-Signal verknüpfte Zustandsanzeiger mit der Vielzahl von E/A-Signalen verknüpft ist und die Diagnoseinformationen Änderungen an einem beliebigen von der Vielzahl von E/A-Signalen anzeigen und
das Verfahren ferner das Verwalten eines Diagnosesignal-Verlaufspuffers für die Vielzahl von E/A-Signalen umfasst, wobei der Diagnosesignal-Verlaufspuffer dafür konfiguriert ist, eine Verlaufsanzeige von Änderungen an einem beliebigen von der Vielzahl von E/A-Signalen bereitzustellen,
wobei der Diagnosesignal-Verlaufspuffer eine Vielzahl von Slots umfasst, wobei jeder Slot einen Eintrag für jedes von der Vielzahl von E/A-Signalen umfasst und wobei jeder der Slots einen Zustand der Vielzahl von E/A-Signalen zu einem unterschiedlichen Zeitpunkt in der Vergangenheit darstellt und
wobei die Diagnoseausgabe auf einem Slot des Diagnosesignal-Verlaufspuffers beruht, auf den durch einen Index verwiesen wird, wobei der Index aktualisiert wird, um mit einer vorbestimmten Frequenz auf einen nächsten der Slots des Diagnosesignal-Verlaufspuffers zu verweisen.

14. Verfahren nach Anspruch 13, wobei die Diagnoseinformationen ein Bit für jedes von der Vielzahl von E/A-Signalen umfassen und jeder Slot des Diagnosesignal-Verlaufspuffers ein Bit für jedes von der Vielzahl von E/A-Signalen umfasst und das Verfahren ferner Folgendes umfasst:
als Reaktion auf das Erzeugen von Diagnoseinformationen, die eine Änderung an mindesten einem von der Vielzahl von E/A-Signalen anzeigen, Aktualisieren des in jedem Slot gespeicherten Wertes durch logisches Kombinieren der Diagnoseinformationen mit dem in dem Schlitz gespeicherten Wert und
Zurücksetzen des Wertes des gegenwärtig indizierten Slots.

15. Verfahren nach einem der Ansprüche 13 bis 14, wobei die vorbestimmte Frequenz auf der Summe der Anzahl von Slots in einem Diagnosesignal-Verlaufspuffer und einem Aktualisierungszeitraum einer Mensch-Maschine-Schnittstelle der Industriemaschine beruht.

## Revendications

1. Procédé de diagnostic de pannes dans une machine industrielle, comprenant :
l'identification (600) d'un premier état associé à la machine industrielle, le premier état comprenant un état actuellement actif d'une machine d'état modélisant les fonctions de la machine industrielle ;
l'identification (601) d'au moins un deuxième état associé à la machine industrielle basé sur le premier état, le au moins un deuxième état comprenant un état de la machine d'état qui était actif à un quelconque moment dans le temps avant que la machine d'état ne passe au premier état ;
pour chaque deuxième état identifié, la détermination d'un temps d'état associé au deuxième état ;
la détermination (602) d'une condition d'indicateur de défaillance en réponse à la détermination, sur la base de l'au moins un deuxième état et des temps d'état respectifs, que la machine industrielle a passé un laps de temps différent d'un laps de temps prédéterminé dans au moins un de l'au moins un deuxième état ;
la génération, en réponse à la détermination de l'indication de panne, d'informations de diagnostic comprenant une indication de l'un de l'au moins un deuxième état ; et
l'émission des informations de diagnostic dans une interface utilisateur de la machine industrielle.

2. Procédé selon la revendication 1, comprenant en outre le maintien, pendant l'utilisation de la machine industrielle, d'un historique d'états et de temps d'état associés, dans lequel l'identification d'un deuxième état et d'un temps d'état associé au deuxième état comprend l'identification du deuxième état et du temps d'état associé à partir de l'historique d'états et de temps d'état associés.

3. Procédé selon la revendication 1 ou 2, comprenant en outre la copie, en réponse à la détermination de la condition de l'indicateur de défaillance, de contenus d'un nombre prédéterminé d'entrées de données dans l'historique d'états et de temps d'état associés.

4. Procédé selon la revendication 1, 2 ou 3, dans lequel le temps d'état associé à chacun de l'au moins un deuxième état est basé sur une valeur d'un temporisateur global à un moment de transition au deuxième état, dans lequel le temporisateur global est utilisé par la machine industrielle pour synchroniser toutes les opérations de la machine industrielle.

5. Procédé selon l'une quelconque des revendications précédentes, dans lequel l'interface utilisateur comprend en outre la génération d'une indication d'un historique d'état de la machine industrielle, l'historique d'état comprenant l'état actuellement actif de la machine industrielle, un état qui sera actif après l'état actuellement actif, un état qui était actif avant l'état actuellement actif et des temps d'état associés à l'état actuellement actif.

6. Procédé selon la revendication 5, dans lequel l'interface utilisateur comprend une indication d'un chemin de transition suivi par la machine industrielle pour parvenir à l'état actuellement actif.

7. Procédé selon l'une quelconque des revendications 5 ou 6, comprenant en outre la fourniture dans l'interface utilisateur, d'un élément d'interface utilisateur force-état, dans lequel la sélection de l'élément d'interface utilisateur force-état provoque la transition de la machine industrielle dans un état prédéterminé.

8. Procédé selon la revendication 7, dans lequel la maintenance, pendant le fonctionnement de la machine industrielle, d'un historique d'états et de temps d'état associés se poursuit après la sélection de l'élément d'interface utilisateur force-état.

9. Procédé selon l'une quelconque des revendications, dans lequel la génération d'une sortie de diagnostic comprend le traitement des informations du deuxième état et de temps d'état pour générer une sortie indiquant le temps des transitions d'état.

10. Procédé selon l'une quelconque des revendications précédentes, comprenant en outre :
l'identification d'un changement d'un signal E/S (1004) associé à la machine industrielle ;
l'attribution, à un indicateur d'état associé au signal E/S, d'une valeur indicative du changement, l'attribution étant configurée pour persister pendant un laps de temps prédéterminé ;
la génération d'informations de diagnostic comprenant en outre une indication d'une valeur actuelle du signal E/S et d'une valeur actuelle de l'indicateur d'état ;
l'émission d'une sortie de diagnostic (1008) sur la base des informations de diagnostic dans une interface utilisateur de la machine industrielle ;
dans lequel la génération d'informations de diagnostic est réalisée à chaque intervalle d'actualisation d'une interface homme-machine de la machine industrielle.

11. Procédé selon la revendication 10, dans lequel le laps de temps prédéterminé est supérieur à un taux d'actualisation d'une interface homme-machine de la machine industrielle.

12. Procédé selon l'une quelconque des revendications 10 à 11, dans lequel l'émission des informations de diagnostic dans une interface utilisateur de la machine industrielle comprend l'émission des informations de diagnostic en utilisant un indicateur présentant quatre modes de fonctionnement, les quatre modes de fonctionnement comprenant :
un premier mode indiquant que le signal E/S est faible et qu'aucun signal élevé n'a été reçu sur un laps de temps prédéterminé passé ;
un deuxième mode indiquant que le signal E/S est faible, mais qu'un changement d'état est survenu au cours du laps de temps prédéterminé passé ;
un troisième mode indiquant que le signal E/S est élevé et qu'un changement d'état est survenu au cours du laps de temps prédéterminé passé ; et
un quatrième mode indiquant que le signal E/S est élevé et n'a pas changé pendant le laps de temps prédéterminé passé.

13. Procédé selon l'une quelconque des revendications 10 à 12, dans lequel le signal E/S est l'un d'une pluralité de signaux d'E/S, l'indicateur d'état associé au signal E/S est associé à la pluralité de signaux d'E/S et les informations de diagnostic indiquent des changements de l'un quelconque de la pluralité de signaux d'E/S ; et
le procédé comprend en outre le maintien d'un tampon d'historique de signal de diagnostic pour la pluralité de signaux d'E/S, le tampon d'historique de signal de diagnostic étant configuré pour fournir une indication historique de changements à l'un quelconque de la pluralité de signaux d'E/S ;
dans lequel le tampon d'historique de signal de diagnostic comprend une pluralité de fentes, chaque fente comprenant une entrée pour chacun de la pluralité de signaux d'E/S et dans lequel chacune des fentes représente un état de la pluralité de signaux d'E/S à un moment différent par le passé ; et
dans lequel la sortie de diagnostic est basée sur une fente du tampon d'historique de signal de diagnostic référencé par un index, dans lequel l'index est mis à jour pour se référer à une prochaine fente du tampon d'historique de signal de diagnostic à une fréquence prédéterminée.

14. Procédé selon la revendication 13, dans lequel les informations de diagnostic comprennent un bit pour chacun de la pluralité de signaux d'E/S et chaque fente du tampon d'historique de signal de diagnostic comprend un bit pour chacun de la pluralité de signaux d'E/S et le procédé comprend en outre :
en réponse à la génération d'informations de diagnostic indiquant un changement à au moins un de la pluralité de signaux d'E/S, la mise à jour de la valeur stockée dans chaque fente en combinant logiquement les informations de diagnostic avec la valeur stockée dans la fente ; et
la réinitialisation de la valeur de la fente actuellement indexée.

15. Procédé selon l'une quelconque des revendications 13 à 14, dans lequel la fréquence prédéterminée est basée sur la somme du nombre de fentes dans un tampon d'historique de signal de diagnostic et une période d'actualisation d'une interface homme-machine de la machine industrielle.
